# EUROPEAN PATENT APPLICATION

(11) **EP 4 703 835 A1**
(43) Date of publication of application: **04.03.2026**
(21) Application number: 24796072.7
(22) Date of filing: 23.04.2024
(51) Int. Cl.: G05D 1/43, G05D 1/242, G05D 1/246, G05D 1/628, G05D 1/648

(54) **CONTROL METHOD FOR CLEANING DEVICE, AND CLEANING DEVICE**

(30) Priority: 27.04.2023 CN 202310473863; 22.05.2023 CN 202310580463; 06.06.2023 CN 202310665144; 15.06.2023 CN 202310714283; 27.06.2023 CN 202310768696; 13.07.2023 CN 202310862067; 10.08.2023 CN 202311006743; 17.08.2023 CN 202311041067; 13.09.2023 CN 202311183922
(71) Applicant: Xingmai Innovation Technology (Suzhou) Co., Ltd., Suzhou, Jiangsu 215124 (CN)
(72) Inventor: WANG, Shengle, Suzhou, Jiangsu 215124 (CN); ZHANG, Shilei, Suzhou, Jiangsu 215124 (CN)
(74) Representative: Huang, Liwei
(86) International application number: PCT/CN2024/089380
(87) International publication number: WO 2024/222692

(57) **Abstract**

This application discloses a cleaning device control method and a cleaning device. The cleaning device operates in water. The cleaning device includes a detection unit and a control unit. The detection unit includes at least a first detection unit provided on a front portion, a second detection unit provided on a side surface, and a position detection unit. The method includes: S11: controlling the cleaning device to determine, by using at least one of the first detection unit or the second detection unit, a starting point from which the cleaning device moves along an edge and move to the starting point; S12: controlling the cleaning device to move along the edge of a target water region from the starting point by using at least one of the first detection unit or the second detection unit until the cleaning device returns to the starting point; S13: in a process in which the cleaning device moves along the edge, obtaining position data of the cleaning device by using the position detection unit and obtaining obstacle detection data by using at least one of the first detection unit or the second detection unit; and S14: constructing a target map of the target water region based on the position data and the detection data. According to the above method, in this application, the target map of the target water region can be constructed.

## Description

### CROSS REFERENCE TO RELATED APPLICATIONS

This application claims priority to: Chinese Patent Application No. 202311006743.5, filed with the China National Intellectual Property Administration on August 10, 2023 and entitled "METHOD FOR CONSTRUCTING MAP OF WATER SURFACE, STORAGE MEDIUM, AND POOL ROBOT"; Chinese Patent Application No. 202310862067.5, filed with the China National Intellectual Property Administration on July 13, 2023 and entitled "TARGET MAP CONSTRUCTING METHOD, STORAGE MEDIUM, AND POOL ROBOT"; Chinese Patent Application No. 202311183922.6, filed with the China National Intellectual Property Administration on September 13, 2023 and entitled "METHOD FOR GENERATING MAP OF POOL, STORAGE MEDIUM, AND POOL ROBOT"; Chinese Patent Application No. 202310580463.9, filed with the China National Intellectual Property Administration on May 22, 2023 and entitled "POSE UPDATING METHOD AND APPARATUS, STORAGE MEDIUM, AND POOL ROBOT"; Chinese Patent Application No. 202310768696.1, filed with the China National Intellectual Property Administration on June 27, 2023 and entitled "METHOD FOR CONTROLLING ROBOT TO MOVE"; Chinese Patent Application No. 202310665144.8, filed with the China National Intellectual Property Administration on June 6, 2023 and entitled "METHOD FOR CONTROLLING ROBOT TO MOVE"; Chinese Patent Application No. 202310714283.5, filed with the China National Intellectual Property Administration on June 15, 2023 and entitled "POOL ROBOT CONTROL METHOD AND STORAGE MEDIUM"; Chinese Patent Application No. 202310473863.X, filed with the China National Intellectual Property Administration on April 27, 2023 and entitled "ROBOT CONTROL METHOD AND APPARATUS"; and Chinese Patent Application No. 202311041067.5, filed with the China National Intellectual Property Administration on August 17, 2023 and entitled "ROBOT CONTROL METHOD", which are hereby incorporated by reference herein.

### TECHNICAL FIELD

This application relates to the field of artificial intelligence technologies, and in particular, to a cleaning device control method and a cleaning device.

### BACKGROUND

Due to low costs and an extremely low error rate, cleaning devices are gradually replacing much labor of people. An example in which the cleaning device is a robot is used. An existing robot operating in water can perform specific operations in the water (for example, performing cleaning and retrieval). However, the robot also has certain problems. Most robots move randomly during operation and do not have mapping and positioning functions, leading to low efficiency in performing specific tasks.

### SUMMARY

This application provides a cleaning device control method and a cleaning device, so that a map of a water region in which the cleaning device is located can be constructed, thereby improving operating efficiency of the cleaning device.

To resolve the foregoing technical problem, a first aspect of this application provides a cleaning device control method. A cleaning device operates in water. The cleaning device includes a detection unit. The detection unit includes at least a first detection unit provided on a front portion of the cleaning device, a second detection unit provided on a side surface of the cleaning device, a position detection unit, and a control unit connected to the detection unit via signals. The cleaning device control method includes: controlling the cleaning device to determine, by using at least one of the first detection unit or the second detection unit, a starting point from which the cleaning device moves along an edge and move to the starting point; controlling the cleaning device to move along the edge of a target water region from the starting point by using at least one of the first detection unit or the second detection unit until the cleaning device returns to the starting point, and controlling a distance between the cleaning device and a wall of the target water region to be less than a preset distance in a process in which the cleaning device moves along the edge; in the process in which the cleaning device moves along the edge, obtaining position data of the cleaning device by using the position detection unit and obtaining obstacle detection data by using at least one of the first detection unit or the second detection unit; and constructing a target map of the target water region based on the position data and the detection data. The target map includes a map of at least one selected from a bottom of the target water region, the wall of the target water region, or a water surface of the target water region.

To resolve the foregoing technical problem, a second aspect of this application discloses a cleaning device. The cleaning device operates in water. The cleaning device includes a detection unit, a mode switching member, at least one water inlet, at least one water outlet, and a filtering unit. The filtering unit is at least partially provided inside the cleaning device. The cleaning device further includes a memory and a processor. The memory stores program instructions. The processor is configured to execute the program instructions to implement the method provided in the first aspect.

### BRIEF DESCRIPTION OF THE DRAWINGS

FIG. 1 is a schematic flowchart of a first embodiment of a cleaning device control method according to this application;
FIG. 2 is a schematic flowchart of a second embodiment of a cleaning device control method according to this application;
FIG. 3 is a schematic flowchart of a third embodiment of a cleaning device control method according to this application;
FIG. 4 is a schematic diagram of a first embodiment of path planning according to this application;
FIG. 5 is a schematic diagram of a second embodiment of path planning according to this application;
FIG. 6 is a schematic diagram of a third embodiment of path planning according to this application;
FIG. 7 is a schematic diagram of a fourth embodiment of path planning according to this application;
FIG. 8 is a schematic flowchart of a fourth embodiment of a cleaning device control method according to this application;
FIG. 9 is a schematic diagram of a first planned path and a second planned path according to an embodiment of this application;
FIG. 10 is a schematic flowchart of a fifth embodiment of a cleaning device control method according to this application;
FIG. 11 is a schematic diagram of a water surface cleaning trajectory of a target water region according to an embodiment of this application;
FIG. 12 is a schematic flowchart of a sixth embodiment of a cleaning device control method according to this application;
FIG. 13 is a schematic flowchart of a seventh embodiment of a cleaning device control method according to this application;
FIG. 14 is a schematic flowchart of an eighth embodiment of a cleaning device control method according to this application;
FIG. 15 is a schematic structural diagram of a cleaning device according to an embodiment of this application;
FIG. 16 is a schematic diagram of a frame structure of a computer-readable storage medium according to an embodiment of this application; and
FIG. 17 is a schematic diagram of a frame structure of a cleaning device control apparatus according to an embodiment of this application.

### DETAILED DESCRIPTION

The following clearly and completely describes the technical solutions in embodiments of this application with reference to the accompanying drawings in embodiments of this application. It is clear that the described embodiments are merely some but not all of embodiments of this application. All other embodiments obtained by a person of ordinary skill in the art based on embodiments of this application without creative efforts shall fall within the protection scope of this application.

It should be noted that the descriptions "first", "second", and the like in embodiments of this application are merely intended for a purpose of description, and shall not be understood as an indication or implication of relative importance or an implicit indication of a quantity of indicated technical features. Therefore, a feature limited by "first" or "second" may explicitly or implicitly include at least one of the features.

An "embodiment" mentioned in this specification indicates that a particular feature, structure, or characteristic described with reference to this embodiment may be included in at least one embodiment of this application. The phrase shown in various positions in this specification may not necessarily refer to a same embodiment, and is not an independent or optional embodiment exclusive from another embodiment. It is explicitly and implicitly understood by a person skilled in the art that embodiments described in this specification may be combined with another embodiment.

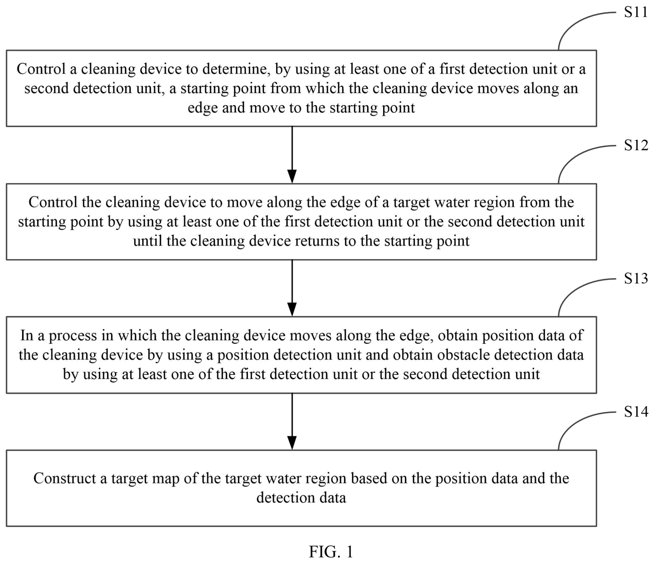

Refer to FIG. 1. FIG. 1 is a schematic flowchart of a first embodiment of a cleaning device control method according to this application. The method includes the following steps.

S11: Control a cleaning device to determine, by using at least one of a first detection unit or a second detection unit, a starting point from which the cleaning device moves along an edge and move to the starting point.

In one embodiment, the cleaning device moves in water. The cleaning device includes a detection unit. The detection unit includes at least the first detection unit provided on a front portion, the second detection unit provided on a side surface, a position detection unit, and a control unit connected to the detection unit through a signal. The cleaning device may be a robot, for example, a pool robot or an underwater robot. The first detection unit and the second detection unit are provided on the cleaning device. Each of the first detection unit and the second detection unit may include a distance measurement sensor. The distance measurement sensor includes, but is not limited to, a line laser sensor, a radar sensor, a lidar, an ultrasonic sensor, an infrared sensor, and the like. Each of the first detection unit and the second detection unit may further include an acoustic radar, a vision sensor, and the like.

When the cleaning device enters a target water region, the cleaning device is controlled to rotate around at a water entry position, a position on a wall closest to the cleaning device is determined as the starting point, and the cleaning device moves to the starting point in a preset direction. An included angle between the preset direction and the wall meets a preset angle. The preset angle may be set by a user. For example, the included angle between the preset direction and the wall is 90°, 85°, or 95°. Specifically, the cleaning device obtains a target distance between the water entry position and each wall of the target water region by using at least one of the first detection unit or the second detection unit during rotation. The water entry position may be on a water surface, in the water, or on the bottom of the target water region. A smallest target distance is selected from various target distances. A wall corresponding to the smallest target distance is taken as a target wall, that is, the target wall is a wall of the target water region closest to the water entry position. The cleaning device is controlled to rotate to face the target wall and move toward the target wall in the preset direction. A position at which the cleaning device reaches the target wall is the starting point. An example in which the water entry position of the cleaning device is at the bottom of the target water region is used. The first detection unit in a forward direction of the cleaning device is used to detect a target distance between a head portion of the cleaning device and each wall of the target water region. The cleaning device is controlled to rotate until the head portion faces a target wall corresponding to a smallest target distance, and the cleaning device is controlled to move to the target wall. When the head portion of the cleaning device collides with the target wall, a position of the cleaning device is taken as the starting point, or when a distance between the head portion of the cleaning device and the target wall meets a specific distance, a position at which the cleaning device is located is taken as the starting point. It may be understood that in other embodiments, the starting point may alternatively be determined based on a distance between each of a left side and a right side of the cleaning device and the wall or a distance between a center point of the cleaning device and the wall. In one embodiment, the cleaning device may move from the water entry position in any direction until the cleaning device abuts against any wall. A contact point is taken as the starting point. Then, a moving direction is adjusted to be a direction substantially parallel to the wall.

In other embodiments, the cleaning device determines whether the cleaning device needs to enter the bottom of the target water region. For example, if the cleaning device only needs to clean the water surface or construct a map of the water surface, the cleaning device does not need to enter the bottom of the target water region. If the cleaning device needs to enter the bottom of the target water region, water may be sucked into a buoyancy cavity inside the cleaning device by using a peristaltic pump inside the cleaning device, and air inside the buoyancy cavity is discharged (in a process of entering the water, a water outlet of the cleaning device is kept on the top of the cleaning device as much as possible to discharge the air), so that the cleaning device is submerged. The buoyancy cavity belongs to a part of a mode switching member of the cleaning device, and the mode switching member can be configured to implement pose switching of the cleaning device among the bottom, the wall, and the water surface of the target water region.

S12: Control the cleaning device to move along the edge of the target water region from the starting point by using at least one of the first detection unit or the second detection unit until the cleaning device returns to the starting point.

In one embodiment, moving along the edge of the target water region may be moving along an edge of the bottom of the target water region or moving along an edge of the water surface of the target water region.

The target water region includes, but is not limited to, a swimming pool, an ornamental reservoir, a wild pool, and the like. When the cleaning device is a pool robot, the pool robot may be located on the water surface of the target water region or the bottom of the target water region, or suspended in the target water region. When the target water region is a swimming pool, the pool robot may alternatively be located on a wall of the swimming pool. The target pool may be of a shape of a square, a circle, an ellipse, or the like.

In a process in which the cleaning device moves along the edge, a distance between the cleaning device and a wall of the target water region may be controlled to be less than a preset distance to ensure that the cleaning device effectively moves along the edge. Specifically, a distance between the front portion of the cleaning device and an obstacle in front of the cleaning device is controlled to be less than a first target preset distance by using the first detection unit, and/or a distance between a side of the cleaning device and an obstacle on a side of the cleaning device is controlled to be less than a second target preset distance by using the second detection unit.

In one embodiment, whether the cleaning device returns to the starting point may be determined based on a variation of a pose of the cleaning device. Specifically, a current pose of the cleaning device at a current moment and an initial pose of the cleaning device at the starting point are obtained, and a variation of the current pose relative to the initial pose is calculated. If the variation of the current pose relative to the initial pose meets a preset threshold, it is determined that the cleaning device returns to the starting point, or if the variation of the current pose relative to the initial pose does not meet the preset threshold, the cleaning device is controlled to continue to move along the edge. The preset threshold may be set by the user. This is not specifically limited herein. The pose may include at least one of a position or a yaw angle/azimuth. The preset threshold includes at least one of a preset position variation or a preset yaw angle/azimuth variation.

In one specific embodiment, a current position of the cleaning device is obtained, and whether a distance between the current position and an initial position meets the preset position variation is determined. If the distance between the current position and the initial position meets the preset position variation, it is determined that the cleaning device returns to the starting point. In another embodiment, a current azimuth of the cleaning device is obtained, and whether a difference between the current azimuth and an initial azimuth meets the preset azimuth variation is determined. If the difference between the current azimuth and the initial azimuth meets the preset azimuth variation, it is determined that the cleaning device returns to the starting point. Alternatively, a current yaw angle of the cleaning device is obtained, and whether a difference between the current yaw angle and an initial yaw angle meets the preset yaw angle variation is determined. If the difference between the current yaw angle and the initial yaw angle meets the preset yaw angle variation, it is determined that the cleaning device returns to the starting point. The preset position variation, the preset azimuth variation, and the preset yaw angle variation may be set as required. This is not specifically limited herein. In another embodiment, in the process of moving along the edge, the cleaning device detects a distance between the cleaning device and the starting point and a yaw angle of the cleaning device at the starting point. When the distance between the cleaning device and the starting point is less than a specific distance, the cleaning device has a tendency to be first close to and then away from the starting point, and it is detected that a variation of a yaw angle of the cleaning device relative to the yaw angle at the starting point is less than 90°, it is determined that loopback is implemented; or in the process of moving along the edge, an accumulated angle in which the cleaning device moves from the starting point to a current position is greater than or equal to 360° + 90°, it is determined that loop closure is implemented.

S13: In the process in which the cleaning device moves along the edge, obtain position data of the cleaning device by using the position detection unit and obtain obstacle detection data by using at least one of the first detection unit or the second detection unit.

In one embodiment, the position detection unit may be a sensor capable of detecting a position of the cleaning device, and position data at each moment may also be referred to as pose data of the cleaning device. For example, the position data includes x, y, and yaw, which respectively indicate a horizontal coordinate, a vertical coordinate, and an azimuth. The obstacle detection data includes at least one of a position of the obstacle, a distance between the obstacle and the cleaning device, or a type of the obstacle.

S14: Construct a target map of the target water region based on the position data and the detection data.

In one embodiment, an example of constructing a map of the water surface of the target water region is used. The position data includes position data of each of N moments obtained when the cleaning device moves along the edge of the water surface of the target water region and does not finish moving along the edge along a preset path. The detection data includes a group of ultrasonic data. The group of ultrasonic data includes data of a reflected signal received by the cleaning device after the cleaning device sends an ultrasonic signal in a preset direction at each of the N moments. N is a positive integer greater than or equal to 2. That the cleaning device does not finish moving along the edge along a preset path indicates that the cleaning device has not returned to the starting point. The detection unit on the cleaning device may be an ultrasonic sensor. Whether there is an obstacle near the cleaning device is detected by using the ultrasonic sensor. The obstacle includes a wall or the like. The above N moments may be moments for obtaining data for a plurality of times based on a preset period. For example, data may be obtained once every 20 ms (or another period). The data obtained each time includes the position data and the ultrasonic data. Certainly, the data may not be obtained based on a fixed period.

Coordinate information of the obstacle detected by the cleaning device at each of the N moments can be obtained based on the position data of each of the N moments and the ultrasonic data corresponding to each of the N moments. The target map of the water surface of the target water region may be constructed based on the coordinate information of the obstacle. For example, a grid, corresponding to coordinates of the obstacle, in a grid map is marked as an obstacle, so that after the cleaning device finishes moving along the edge along the preset path during moving on the water surface of the target water region, a plurality of obstacles may be marked in the grid map. For example, after the cleaning device moves on the water surface of the target water region by one circle or one round, the target map of the water surface of the target water region may be obtained. In actual application, after the target map of the water surface is constructed, the cleaning device may perform a corresponding operation on the pool based on the constructed target map, such as performing a cleaning operation, disinfection, water quality testing, or other operations.

In one embodiment, position data of each of the N moments is represented as current position data, and the current position data is used to represent position data of the cleaning device at a current moment in the N moments. In one specific embodiment, a target propeller and an inertial measurement unit (IMU) are further provided on the cleaning device. Motion data of the target propeller at the current moment and angle data of the cleaning device obtained by the IMU at the current moment are obtained, and then the current position data is obtained based on the motion data and the angle data. The motion data may be a rotation speed or a linear velocity of the target propeller. In this case, a moving distance at the current moment relative to a previous moment may be obtained based on the rotation speed or the linear velocity of the target propeller, and then the current position data of the cleaning device at the current moment may be obtained based on the moving distance and the angle data. The target propeller may include a motor and an impeller, and may be provided at the rear of the cleaning device. In actual application, the target propeller may be a single propeller or a plurality of propellers. For example, one propeller may be provided on each of a left side and a right side of the rear of the cleaning device. The cleaning device moves on the water surface under a driving force generated by the propeller of the cleaning device. According to this embodiment, the current position data of the cleaning device on the water surface is determined based on the motion data of the target propeller and the angle data of the IMU. In another specific embodiment, a center point linear velocity of the cleaning device may be determined based on the rotation speed of the target propeller. The center point linear velocity is used to indicate a moving distance of a center point of the cleaning device per unit time. The moving distance of the cleaning device at the current moment relative to the previous moment is determined based on the center point linear velocity.

In the above embodiment, position data of obstacles on the water surface may be determined based on a group of position data and a group of ultrasonic data. For example, data of N coordinate pairs may be obtained based on position data of each of the N moments and ultrasonic data corresponding to each of the N moments, and then coordinate information of the obstacles detected at different moments may be obtained, that is, the position data of the obstacles detected at different moments in the process in which the cleaning device moves along the edge of the water surface may be obtained. Then, the target map of the water surface may be obtained by performing marking on the grid map based on the position data of the obstacles.

In the above embodiment, when the cleaning device is a pool robot, the pool robot is equipped with a buoyancy cavity and a water pump for sucking and discharging water, and has a water surface cleaning function. In addition, the pool robot is equipped with a scheme for performing positioning and estimation on the water surface to implement functions of performing positioning on the water surface and constructing a map of the water surface. The pool robot moves forward and backward on the water surface mainly through forward rotation and reverse rotation of the propeller, and a left propeller and a right propeller have different rotation speeds, so that the pool robot can turn left or right.

After the map of the water surface is constructed, path planning may be performed based on a map construction result, and then water surface cleaning may be finished. Processes of constructing maps of the bottom and the wall of the target water region may be implemented in steps similar to those described above. Details are not described herein again. According to the above embodiment, the scheme for performing positioning on the water surface based on the rotation speed of the propeller is proposed to estimate the position of the robot and construct a grid map, in a case where it is extremely difficult to perform positioning on the water surface and control motion. In this way, a robot motion strategy can be executed more accurately based on a positioning result and the map, and after the robot finishes moving along the edge of the water surface, paths covering the water surface can be calculated based on the constructed grid map, and a reasonable cleaning strategy can be executed.

In the above manner, in the process in which the cleaning device moves along the edge, the position data of the cleaning device is obtained by using the position detection unit, the obstacle detection data is obtained by using at least one of the first detection unit or the second detection unit, and the target map of the target water region is constructed based on the position data and the detection data.

In one embodiment, the cleaning device is further provided with a mode switching member. When the cleaning device needs to move from the bottom of the target water region to the water surface of the target water region or from the water surface of the target water region to the bottom of the target water region, motion modes of the cleaning device may be switched by using the mode switching member. The mode switching member is connected to the control unit, and the control unit controls state switching of the cleaning device by adjusting a volume of gas or liquid in the mode switching member. For example, a process in which the cleaning device moves from the bottom of the target water region to the water surface includes a process of controlling the cleaning device to move from the wall of the target water region to a waterline, and the control unit controls, by increasing the volume of gas and/or decreasing the volume of liquid in the mode switching member, the cleaning device to be switched to a water surface motion state.

In another embodiment, in the process in which the cleaning device moves along the edge, if the first detection unit detects that there is an obstacle ahead, the cleaning device may be controlled to decelerate when a distance between the cleaning device and the obstacle is a first preset distance, for example, 70 cm, to prevent the cleaning device from strongly colliding with the obstacle, and when the cleaning device is close to the obstacle, and the distance therebetween reaches a second preset distance, the cleaning device is controlled to avoid the obstacle and continue to move along the edge, that is, the cleaning device is controlled to go around a contour of the obstacle and move along the edge.

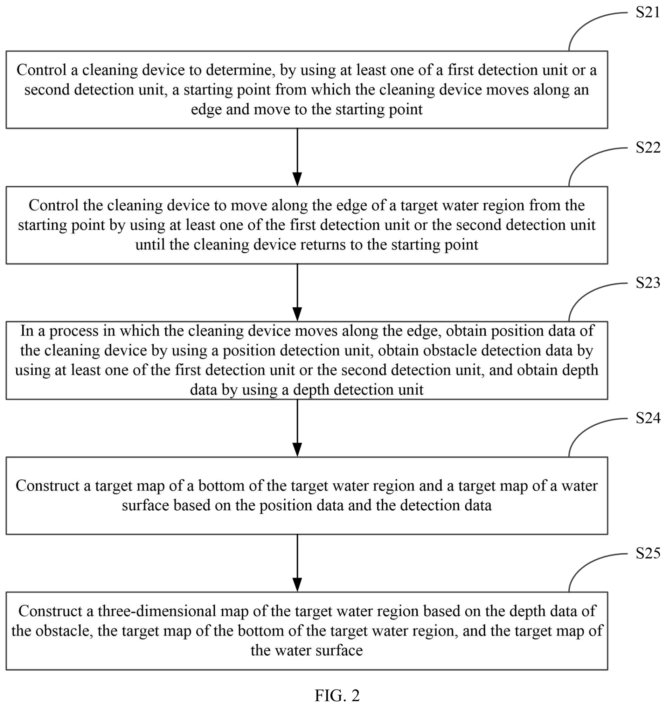

Refer to FIG. 2. FIG. 2 is a schematic flowchart of a second embodiment of a cleaning device control method according to this application. The method includes the following steps.

S21: Control a cleaning device to determine, by using at least one of a first detection unit or a second detection unit, a starting point from which the cleaning device moves along an edge and move to the starting point.

S22: Control the cleaning device to move along the edge of a target water region from the starting point by using at least one of the first detection unit or the second detection unit until the cleaning device returns to the starting point.

S23: In a process in which the cleaning device moves along the edge, obtain position data of the cleaning device by using a position detection unit, obtain obstacle detection data by using at least one of the first detection unit or the second detection unit, and obtain depth data by using a depth detection unit.

The depth data includes at least one of depth data of an obstacle, depth data of the target water region, or depth data of the cleaning device.

S24: Construct a target map of the bottom of the target water region and a target map of a water surface based on the position data and the detection data.

For specific implementation of steps S21 to S24, refer to related descriptions of the first embodiment of the cleaning device control method provided in this application. Details are not described herein again.

In another embodiment, in the process in which the cleaning device moves along the edge, a target obstacle in the target water region is detected by using at least one of the first detection unit or the second detection unit. The target obstacle may be any obstacle. When it is determined that the target obstacle is detected, a relative position relationship between the target obstacle and the cleaning device is obtained, and a first position of the cleaning device at a target moment at which the target obstacle is detected is obtained by using the position detection unit. A second position of the target obstacle is determined based on the relative position relationship and the first position of the cleaning device at the target moment, and a target map of the target water region is constructed based on the second position of the target obstacle. The target map of the target water region includes the target map of the bottom of the target water region and the target map of the water surface. In one embodiment, when coordinates of each of the first position and the second position include only a horizontal coordinate and a vertical coordinate in a global coordinate system, the constructed target map is a two-dimensional map. In another embodiment, when coordinates of each of the first position and the second position include a horizontal coordinate, a vertical coordinate, and a depth coordinate in the global coordinate system, the constructed target map is a three-dimensional map.

S25: Construct a three-dimensional map of the target water region based on the depth data, the target map of the bottom of the target water region, and the target map of the water surface.

In one embodiment, when each of the target map of the bottom of the target water region and the target map of the water surface is a two-dimensional map, a horizontal coordinate and a vertical coordinate of each position point in the map in the global coordinate system may be obtained from the map, and then the three-dimensional map of the target water region is constructed based on depth data of each position point detected by a depth sensor. When each of the target map of the bottom of the target water region and the target map of the water surface is a three-dimensional map, three-dimensional coordinates of each position point in the map may be obtained directly, and the above determined three-dimensional coordinates may be corrected by using a plurality of sensors (for example, a depth sensor and a distance sensor) mounted in the target water region or on the cleaning device.

In one specific embodiment, the constructing a three-dimensional map of the target water region includes: obtaining a displacement of the cleaning device per unit time by using a code disk provided inside the cleaning device; determining sub-displacements of the displacement in a plurality of directions per unit time based on Euler angles of the cleaning device before the cleaning device is displaced, where the Euler angles are determined by using an inertial measurement unit provided inside the cleaning device; accumulating sub-displacements in the plurality of directions in N units of time to an initial position of the cleaning device, and determining the first position of the cleaning device at the target moment based on an accumulation result, where N is a natural number greater than or equal to 1, N is determined based on a difference between the target moment and an initial moment, the initial position is a position at the initial moment, and the first position and the initial position are positions of the cleaning device in the global coordinate system; determining the second position of the target obstacle based on the relative position relationship between the target obstacle and the cleaning device and the first position of the cleaning device at the target moment; and constructing the three-dimensional map of the target water region based on the second position of the target obstacle, where coordinates of the first position, the second position, and the initial position are three-dimensional coordinates.

In one embodiment, the determining the first position of the cleaning device at the target moment based on an accumulation result includes: determining a depth of the cleaning device in the target water region by using the depth sensor provided inside the cleaning device, and calibrating, based on the depth of the cleaning device in the target water region, an accumulated target depth included in the accumulation result, to obtain the first position of the pool robot at the target moment. In the above embodiment, calibrating the first position includes calibrating the depth coordinate of the first position. A calibration manner may include determining a value of the depth of the cleaning device in the target water region as the depth coordinate of the first position when a difference between the depth of the cleaning device in the target water region and the accumulated target depth exceeds a preset threshold, or determining an average value of the depth of the cleaning device in the target water region and the accumulated target depth as the depth coordinate of the first position when the difference between the depth of the cleaning device in the target water region and the accumulated target depth exceeds the preset threshold. When the difference between the depth of the cleaning device in the target water region and the accumulated target depth is less than the preset threshold, the calibration manner may include, but is not limited to, determining a value of the accumulated target depth as the depth coordinate of the first position and determining the value of the depth of the cleaning device in the target water region as the depth coordinate of the first position. The preset threshold may be two, three, or five depth units. When the cleaning device constructs a map of the water surface, the accumulated target depth may be 0. The accumulation result is determined based on the first position at the beginning of a previous unit time and a displacement of the cleaning device during the previous unit time. Coordinates of the first position may be current coordinates obtained by performing accumulation based on coordinates of the cleaning device that have been calibrated at the previous unit time. Optionally, the determining the first position of the cleaning device at the target moment based on an accumulation result further includes: when the cleaning device moves on the water surface of the target water region, correcting the accumulated target depth based on a depth of the cleaning device in the target water region obtained by using the depth sensor provided inside the pool robot. The first position is calibrated based on the depth of the cleaning device in the target water region determined by using the depth sensor, so that a positioning error can be systematically reduced, and positioning accuracy can be improved.

In one embodiment, the relative position relationship includes a target position of the target obstacle in a coordinate system of the cleaning device. The target position is determined based on a distance and an angle between the target obstacle and the cleaning device. The distance and the angle between the target obstacle and the cleaning device may be determined based on data detected by a target sensor provided inside the cleaning device.

In one embodiment, a translation transformation relationship between the target position and the second position of the target obstacle is determined based on a displacement of the cleaning device at the first position at the target moment relative to an origin of the global coordinate system. The relative position relationship includes the target position of the target obstacle in the coordinate system of the cleaning device. The target position is a position of the target obstacle in the coordinate system of the cleaning device. The second position is a position of the target obstacle in the global coordinate system. A rotation transformation relationship between the target position and the second position of the target obstacle is determined based on Euler angles of the cleaning device at the target moment. The Euler angles are determined by using the inertial measurement unit provided inside the cleaning device. The target position is converted into the second position of the target obstacle based on the rotation transformation relationship and the translation transformation relationship. In the above embodiment, the translation transformation relationship may be represented by a translation matrix, and the rotation transformation relationship may be represented by a rotation matrix. The second position may be obtained by performing an operation on the translation matrix, the rotation matrix, and the target position. In the above embodiment, a transformation relationship between the global coordinate system and the coordinate system of the cleaning device is determined based on pose information of the cleaning device in the global coordinate system, and then coordinates of the target obstacle in the coordinate system of the cleaning device are converted into coordinates in the global coordinate system, to effectively determine a three-dimensional voxel, corresponding to the target obstacle, in the map.

A voxel corresponding to the second position of the target obstacle is marked in a three-dimensional map, and when it is determined that the cleaning device has moved along an edge of the target water region by one round, map construction is completed, and the three-dimensional map of the target water region is obtained. In the above embodiment, a marking manner includes determining a three-dimensional voxel, corresponding to the target obstacle, in the three-dimensional map based on a ratio of the second position of the target obstacle to a preset resolution, to mark the three-dimensional voxel. If a voxel is marked as the target obstacle, the voxel is displayed in the three-dimensional map. If a voxel is not marked as the target obstacle, the voxel is not displayed. The three-dimensional map is a global map composed of a voxel.

Before the relative position relationship between the target obstacle and the pool robot is obtained, the above implementation further includes: obtaining distances between the cleaning device and a plurality of edges of the target water region when the cleaning device enters the target water region; determining a target edge based on the distances, where the target edge is an edge closest to the cleaning device and included in the plurality of edges; and controlling the cleaning device to move to the target edge and move along the edges of the target water region from the target edge. In the above embodiment, the method for determining the distances between the cleaning device and the edges includes, but is not limited to, directly measuring the distances by using a sensor, determining the distances by using a photographing device or a pose sensor of the cleaning device, and the like. The distances between the cleaning device and the plurality of edges are determined, to determine the target edge and control the cleaning device to move to the target edge. This can shorten map construction preparation time of the cleaning device and effectively improve overall map construction efficiency.

In one specific embodiment, the cleaning device is a pool robot. An ultrasonic sensor and a depth sensor are provided on the pool robot. After the pool robot starts a map construction task, the pool robot is controlled to enter the target water region and start to move along the edge of the target water region, and the pool robot determines whether the pool robot has moved along the edge of the target water region by one round. When the pool robot has moved along the edge of the target water region by one round, the map construction task ends, and the three-dimensional map of the target water region is generated. Otherwise, the pool robot obtains a variation of an angle of the pool robot by using the inertial measurement unit in a moving process, obtains a variation of a displacement of the pool robot based on data obtained by using the code disk, and then calculates current three-dimensional coordinates of the pool robot based on initial three-dimensional coordinates of the pool robot. The pool robot obtains, by using the depth sensor, a depth of a position at which the pool robot is located in the target water region, and corrects, based on the depth of the pool robot, the depth coordinate determined based on the accumulated target depth in the current three-dimensional coordinates. The pool robot obtains target coordinates of the obstacle by using the ultrasonic sensor. The target coordinates of the obstacle are coordinates of the obstacle in a coordinate system of the pool robot. The pool robot determines a transformation relationship between the target coordinates of the target obstacle and three-dimensional coordinates of the target obstacle based on current Euler angles and the current three-dimensional coordinates of the pool robot, and obtains the three-dimensional coordinates of the target obstacle based on the transformation relationship. The three-dimensional coordinates of the target obstacle are coordinates of the target obstacle in the global coordinate system. The pool robot marks a three-dimensional voxel, corresponding to the three-dimensional coordinates of the target obstacle, in the three-dimensional map, and continues to move along the edge of the target water region until map construction is completed.

In one embodiment, after the target map is obtained in any one of the foregoing manners, the method may include at least one of the following steps: constructing a target map model based on the target map, where the target map model includes a bottom model, a wall model, and a water surface model of the target water region; constructing a three-dimensional rendered map of the target water region based on the bottom model, the wall model, and the water surface model of the target water region and displaying the three-dimensional rendered map on a terminal, where the three-dimensional rendered map supports independent splitting for independent selection of a user; or controlling the cleaning device to perform a target operation on a selected split unit.

The constructing a target map model based on the target map includes: mapping a plurality of pieces of two-dimensional coordinate information to the three-dimensional map to obtain target three-dimensional coordinate information, where the two-dimensional coordinate information is grid information, of a target position point in the target water region, pre-detected by the cleaning device, and may be obtained based on the target map, and the target position point may be a position point in the target water region detected by the cleaning device when the cleaning device constructs the target map, and include a position point on the bottom of the target water region, a position point on the wall, and a position point on an object in the target water region (for example, an obstacle or a landscape in the target water region); generating the bottom model of the target water region in the three-dimensional map of the target water region based on bottom information of the target water region included in the target three-dimensional coordinate information; and generating the wall model and the water surface model of the target water region in the three-dimensional map of the target water region based on the bottom information.

An example in which the target water region is a pool is used. The above three-dimensional map includes the target three-dimensional coordinate information obtained by performing mapping based on grip data obtained when the cleaning device currently moves in the pool, and the three-dimensional map of the pool may be obtained by performing various rendering operations based on the target three-dimensional coordinate information. The above three-dimensional map may include other rendered models (for example, a model of a house and a model of a tree) other than the three-dimensional map of the pool. An operation trajectory of the cleaning device in the map corresponds to a trajectory line generated in real time when the cleaning device moves in the pool. In addition, the above three-dimensional map may alternatively be pre-constructed. In addition, after the cleaning device is repositioned to determine coordinates of the cleaning device, the trajectory line generated in real time when the cleaning device moves may be added to the three-dimensional map of the pool. An occasion for constructing the above three-dimensional map is not limited in this application.

In one embodiment, the mapping a plurality of pieces of two-dimensional coordinate information to the three-dimensional map includes: traversing the plurality of pieces of two-dimensional coordinate information to determine information of a second position point with a largest coordinate value and information of a third position point with a smallest coordinate value that are included in the plurality of pieces of two-dimensional coordinate information; determining a coordinate origin of the three-dimensional map based on information of a fourth position point located at a middle position between the second position point and the third position point; and mapping the plurality of pieces of two-dimensional coordinate information to the three-dimensional map based on a difference between each piece of two-dimensional coordinate information and the coordinate origin. When the second position point and the third position point are determined, one of a plurality of world coordinate systems in which the robot is located when the robot detects a target position point may be used as a reference coordinate system, to obtain mapped coordinates of each position point mapped to the reference coordinate system. Then, the two position points with a largest coordinate value and a smallest coordinate value may be obtained therefrom. In addition, because height (or depth) information of the second position point and height (or depth) information of the third position point are both known in advance, height (or depth) information of the fourth position point can be calculated naturally. In this way, position information of the coordinate origin determined based on the information of the fourth position point can be known. Then, a position of each position point in the three-dimensional map can be determined based on coordinate differences between other position points and the coordinate origin. In this embodiment, the fourth position point may be directly determined as the coordinate origin, or the coordinate origin may be obtained by performing specific deviation processing based on the fourth position point. In addition, a view angle of the three-dimensional map of the target water region can be changed by mapping the two-dimensional coordinate information. For example, a center point of the three-dimensional map of the target water region under a three-dimensional view angle is used as a center point of the pool, to improve a generation effect of the map of the target water region.

In one embodiment, the generating the bottom model of the target water region in the three-dimensional map of the target water region based on bottom information of the target water region included in the target three-dimensional coordinate information includes: connecting coordinate points corresponding to position information of adjacent edges included in position information of the pool bottom; generating an edge connection graph of the bottom of the target water region in the three-dimensional map of the target water region based on a connection result; and rendering the edge connection graph of the bottom to obtain the bottom model. The position information of the pool bottom may include position information of an edge located near a contour of the bottom of the target water region and position information of a region located near a central region of the target water region. When the edge connection graph of the bottom is constructed, coordinate points corresponding to position information of edges of the target water region may be connected to obtain the edge connection graph of the bottom. If transition between some of lines in the edge connection graph of the bottom is abrupt, a joint between abrupt line segments may be smoothed to obtain the edge, of the bottom of the target water region, represented by smooth lines. In addition, the edge of the bottom of the target water region may be straight or curved, and a type of the edge may be determined based on a shape of a line segment formed after edge points are connected. For example, when connection lines of the edge points cannot form a straight line segment, a connection line segment before the connection lines that cannot form a straight line segment is considered as a line segment of a straight edge. When a series of edge points cannot be connected to form a straight line, the series of edge points is marked as irregular curve points, and connection lines of the irregular curve points are considered as line segments of a curved edge.

In one embodiment, the generating the water surface model of the target water region in the three-dimensional map of the target water region based on the bottom information includes: obtaining a distance, between each first position point on the water surface and the bottom of the target water region, pre-detected by the cleaning device; generating a connection graph of the water surface of the target water region in the three-dimensional map of the target water region based on the distance between each first position point and the bottom of the target water region; and rendering the connection graph of the water surface to obtain the water surface model.

In the above embodiment, position information, of each target position point, pre-detected by the cleaning device includes coordinate information of each target position point. Generally, coordinate information of a position point detected by the cleaning device includes coordinate point information in a two-dimensional coordinate system, namely, coordinate values in a world coordinate system in which the cleaning device is currently located. In addition, the cleaning device may determine depth information of each position point or a distance between each position point and a reference surface (for example, the bottom of the target water region) by using a depth detection sensor (for example, a radar sensor, an infrared sensor, and a pressure sensor) provided inside the cleaning device or based on a specific algorithm. Therefore, a pre-detected depth (or a height relative to the reference surface) of the target position point is actually recorded in the cleaning device. In this way, the information of each position point can be completely mapped to three axes of the three-dimensional map.

In the above embodiment, the distance between each first position point and the bottom of the target water region may be determined based on a depth (or a height relative to the reference surface), of each first position point on the water surface, pre-detected by the cleaning device, so that some points on the water surface can be identified in the three-dimensional map. Then, a position of a part of the connection graph of the water surface in the three-dimensional map of the target water region can be obtained by connecting the identified points, and the entire connection graph of the water surface can be obtained by extending the part of the connection graph of the water surface outward to the wall of the target water region. In this way, the entire connection graph of the water surface can be rendered subsequently. In addition, in this embodiment, the entire connection graph of the water surface can also be rendered by using a Three.js technology, and all of regions between the water surface and the bottom of the target water region can also be rendered as textures of the water region.

In one embodiment, the generating the wall model of the target water region in the three-dimensional map of the target water region based on the bottom information includes: generating an inner wall model of the target water region in the three-dimensional map of the target water region based on the bottom information; and extending the inner wall model outward in the three-dimensional map of the target water region to generate the wall model of the target water region in the three-dimensional map of the target water region. In this embodiment, the wall of the actual target water region has a certain thickness. To make a shape of the target water region in the three-dimensional map closer to a shape of the actual target water region, after the inner wall model is generated, the inner wall model needs to be extended outward by a certain pixel (a size of the extending pixel may be determined based on the actual thickness of the wall, or a fixed pixel value is set, or the pixel value is set based on other conditions), to obtain a more real shape of the target water region.

In one embodiment, the generating an inner wall model of the target water region in the three-dimensional map of the target water region based on the bottom information includes: determining an edge line of the target water region in the three-dimensional map of the target water region based on the bottom information; extending the edge line upward by a preset height to generate a connection graph of the wall of the target water region in the three-dimensional map of the target water region; and rendering the connection graph of the wall to obtain the inner wall model. In this embodiment, the wall model is actually attached to an edge of the bottom model. Therefore, the edge of the bottom model may be extended upward (that is, in a direction of a Z-axis of the three-dimensional coordinate system) to generate the connection graph of the wall. During extension, a specific extension height may be set based on an actual situation. For example, a height of the wall model may be set to be equal to a height of the water surface model, or the wall model may be set to be higher than the water surface model. In addition, the cleaning device may pre-detect a height difference between the wall of the target water region and the water surface, and then the height of the wall model is set based on the pre-detected height difference. The height of the wall model may be set in a pre-configured manner.

In one embodiment, the extending the inner wall model outward in the three-dimensional map of the target water region to generate the wall model in the three-dimensional map of the target water region includes: extending the inner wall model outward by a preset quantity of pixel points in the three-dimensional map of the target water region to obtain an outer wall model; connecting a point on the inner wall model to a point on the outer wall model to form a wall gap-filling geometry; and rendering the wall gap-filling geometry to obtain the wall model. In this embodiment, each wall of the target water region actually has a certain thickness. To make the target water region presented in the three-dimensional map of the target water region closer to the actual target water region, the generated inner wall model may be extended outward, for example, by 2 pixel points, 5 pixel points, or another quantity of pixel points, or may be extended outward by a certain proportion (for example, 1/50 or 1/100) based on an overall width of the target water region. The outward extension actually indicates performing extension along an X-axis and/or a Y-axis in a direction away from the target water region. In addition, after each inner wall model is extended outward, there are gaps between the wall models. In this case, these gaps need to be filled. For example, when the inner wall models are formed by connecting a plurality of line segments, adjacent line segments of the inner wall models are extended outward to form two outward extended line segments, each of two outward extended line segments has an endpoint close to an intersection point of the adjacent line segments, and the intersection point and two endpoints are connected to each other to form a triangle. Then, the triangle is extended from the bottom of the target water region to the top of the target water region to obtain the wall gap-filling geometry. Optionally, after connection, smooth transition processing may be further performed on the geometry formed through connection, so that the walls can be smoothly connected. In this embodiment, the wall models may be split and rendered through data splitting (that is, data belonging to different walls and the bottom of the target water region is distinguished by using specific code or a specific program, to determine position points corresponding to a wall or the bottom of the target water region). After splitting and rendering are performed, different regions may be rendered with different colors. After the wall models are split, in a subsequent work process, a specific wall model or a region on the bottom model of the target water region may be individually selected, and the cleaning device may be controlled to clean the region.

In one embodiment, after the wall model is generated, the method further includes: connecting points on an outer side of the wall model to form an outer contour of the wall of the target water region in the three-dimensional map of the target water region; forming a ground geometry located at a periphery of the target water region after the outer contour of the wall is hollowed out in the three-dimensional map of the target water region; and rendering the ground geometry to obtain a ground model located at the periphery of the target water region.

In one embodiment, the method further includes: obtaining position information of the robot when the cleaning device operates in the target water region; mapping the position information of the robot to the three-dimensional map of the target water region to obtain path data of the cleaning device in the three-dimensional map of the target water region; processing the path data to generate a trajectory geometry whose thickness is less than a target quantity of pixel points; and rendering the trajectory geometry to obtain an operation trajectory of the cleaning device in the three-dimensional map of the target water region. A width of the trajectory geometry may be determined based on a width of the cleaning device. In the above embodiment, a two-dimensional or three-dimensional cleaning device and the operation trajectory of the cleaning device may further be rendered in the three-dimensional map of the target water region. The operation trajectory of the cleaning device is determined based on an actual motion path of the cleaning device. Generally, a cleaning width of the cleaning device is determined based on the width of the cleaning device. Therefore, when the trajectory geometry of the cleaning device is generated, pre-stored width data of the cleaning device may be obtained, and then the trajectory geometry of the cleaning device is rendered based on the width data. In addition, considering that a height of the cleaning device is less than that of the target water region, the thickness of the trajectory geometry of the cleaning device may be set to be small, for example, one pixel point or two pixel points. The operation trajectory of the cleaning device is rendered, so that a user can view an operation progress of the cleaning device in real time. In this way, a cleaning progress and coverage area of the cleaning device can be intuitively known. This facilitates subsequent actions such as water use assessment, water drainage and exchange assessment, and other types of cleaning of the cleaning device.

In embodiments of this application, the walls and the bottom of the target water region can be observed and displayed from multiple dimensions. The user can freely select a specific region to observe and trigger the cleaning device to clean the region directionally. In this way, the cleaning device has a stronger fixed-point cleaning capability.

In one embodiment, after the wall model and the water surface model of the target water region in the three-dimensional map of the target water region are generated based on the bottom information, the three-dimensional map of the target water region may be displayed on an application interface of a mobile terminal. The three-dimensional map of the target water region includes at least one of the bottom model, the wall model, or the water surface model of the target water region.

In one embodiment, after the three-dimensional map of the target water region is displayed on the application interface of the mobile terminal, the user may select the three-dimensional map of the target water region on the application interface. When the mobile terminal receives a selection instruction for the three-dimensional map of the target water region, a target region in the target water region is determined based on the selection instruction, and the cleaning device is controlled to move to the target region to perform a preset operation on the target region. The preset operation may include cleaning, disinfection, and the like. In this embodiment, the map of the target water region may be viewed by using a specific APP, and a region of the target water region (for example, a wall, the bottom of the target water region, or the water surface) may be selected by using the APP, to trigger a control instruction to control the cleaning device to move to the selected region to operate. The cleaning device may be controlled to move to a specific position point at the selected region (for example, a center point of the region, a starting point of an edge of the region, or a middle point of an edge of the region), or move to a point at the selected region, where the point is closest to the cleaning device.

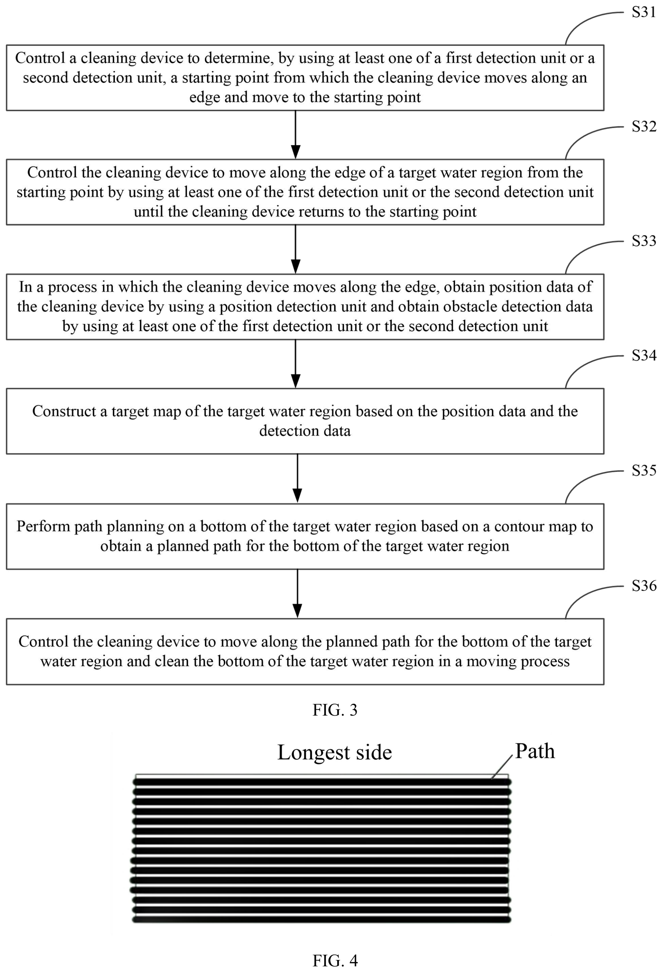

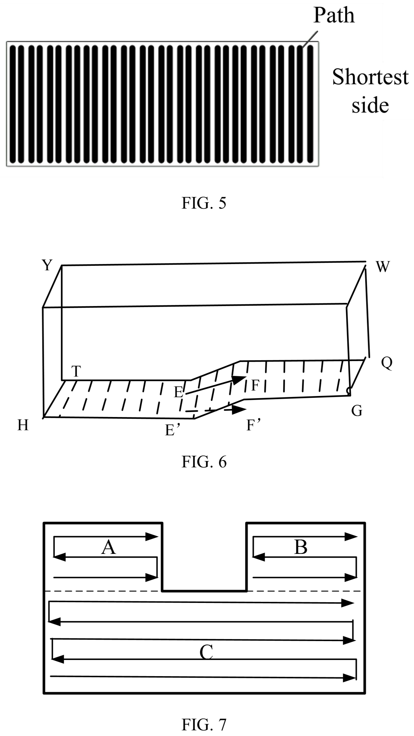

Refer to FIG. 3 to FIG. 7. FIG. 3 is a schematic flowchart of a third embodiment of a cleaning device control method according to this application. FIG. 4 is a schematic diagram of a first embodiment of path planning according to this application. FIG. 5 is a schematic diagram of a second embodiment of path planning according to this application. FIG. 6 is a schematic diagram of a third embodiment of path planning according to this application. FIG. 7 is a schematic diagram of a fourth embodiment of path planning according to this application. The method includes the following steps.

S31: Control a cleaning device to determine, by using at least one of a first detection unit or a second detection unit, a starting point from which the cleaning device moves along an edge and move to the starting point.

S32: Control the cleaning device to move along the edge of a target water region from the starting point by using at least one of the first detection unit or the second detection unit until the cleaning device returns to the starting point.

S33: In a process in which the cleaning device moves along the edge, obtain position data of the cleaning device by using a position detection unit and obtain obstacle detection data by using at least one of the first detection unit or the second detection unit.

S34: Construct a target map of the target water region based on the position data and the detection data.

In one embodiment, the target map includes a contour map of the bottom of the target water region. For specific implementation of steps S31 to S34, refer to related descriptions of the first embodiment of the robot control method provided in this application. Details are not described herein again.

In another embodiment, when the cleaning device sinks to the bottom of the target water region, the cleaning device is controlled to rotate around the target water region to find an edge of the target water region. Specifically, a sensor (for example, an ultrasonic sensor) is provided on the cleaning device, and the edge of the target water region may be detected based on sensing information collected by the ultrasonic sensor. After the edge of the target water region is detected, the cleaning device is controlled to move along the edge of the bottom of the target water region. In a moving process of the cleaning device, the sensing information is collected by the sensor provided on the cleaning device (for example, ultrasonic sensing information is collected by the ultrasonic sensor provided on the cleaning device). The contour map of the bottom of the target water region is constructed based on edge information of the bottom of the target water region included in the sensing information. The target water region includes a pool, a swimming pool, and the like, and the cleaning device includes a robot.

S35: Perform path planning on the bottom of the target water region based on the contour map to obtain a planned path for the bottom of the target water region.

The planned path for the bottom of the target water region includes a plurality of round-trip parallel paths, and the planned paths for the bottom of the target water region cover the bottom of the target water region.

In one embodiment, an example in which the target water region is a pool is used. The planned path for the bottom of the pool includes a plurality of round-trip parallel paths, and the planned paths for the bottom of the pool cover the bottom of the pool. The performing path planning on the bottom of the target water region based on the contour map to obtain a planned path for the bottom includes: determining a shape of the bottom based on the contour map; when the shape of the bottom is polygonal, determining a longest side and a shortest side of the bottom of the target water region; and determining a plurality of paths that have a target position relationship with the longest side or the shortest side of the bottom as the planned paths for the bottom. The target position relationship includes a parallel relationship or a perpendicular relationship. Specifically, a plurality of paths parallel to the longest side of the bottom may be determined as the planned paths for the bottom; or a plurality of paths parallel to the shortest side of the bottom may be determined as the planned paths for the bottom; or a plurality of paths perpendicular to the longest side of the bottom may be determined as the planned paths for the bottom; or a plurality of paths perpendicular to the shortest side of the bottom may be determined as the planned paths for the bottom.

In one specific embodiment, a contour map shown in FIG. 4 is used as an example. A plurality of paths parallel to the longer side are planned on the contour map, and the planned paths cover the entire contour map. Alternatively, a contour map shown in FIG. 5 is used as an example. A plurality of paths parallel to the shortest side are planned on the contour map, and the planned paths cover the entire contour map. Similarly, a plurality of paths perpendicular to the longest side or the shortest side may be planned on the contour map. Because the planned paths on the contour map cover the entire contour map, the cleaning device may move to various positions at the bottom of the target water region along the planned paths. The cleaning device is provided with a cleaning member, and the cleaning member cleans the bottom of the target water region in the moving process of the cleaning device, so that a technical effect of cleaning the bottom of the target water region more thoroughly can be achieved.

In one optional embodiment, when a length of the longest side of the bottom of the target water region is greater than or equal to a first preset length threshold, the plurality of paths perpendicular to the longest side of the bottom of the target water region are determined as the planned paths for the bottom of the target water region; or when a length of the shortest side of the bottom of the target water region is less than or equal to a second preset length threshold, the plurality of paths perpendicular to the shortest side of the bottom of the target water region are determined as the planned paths for the bottom of the target water region. The first preset length threshold and the second preset length threshold may be set based on an actual situation.

In one specific embodiment, the first preset length threshold and the first preset length threshold may be set based on an actual situation. When the length of the longest side of the bottom of the target water region is too large (greater than or equal to the first preset length threshold), if a path is planned to be parallel to the longest side, a moving distance of the cleaning device on one path is too long, which may lead to a deviation in the motion of the cleaning device, affecting a cleaning effect. If a path is planned to be perpendicular to the longest side, a moving distance of the cleaning device on each path may be appropriate. Similarly, when the length of the shortest side is too small (less than or equal to the second preset length threshold), if a path is planned to be parallel to the shortest side, a moving distance of the cleaning device on one path is too short, which may lead to frequent path changing, affecting cleaning efficiency. If a path is planned to be perpendicular to the shortest side, a moving distance of the cleaning device on each path may be appropriate. The length threshold is set, so that the planned path is not too long or too short, thereby achieving a technical effect that a moving distance of the cleaning device on each path is more reasonable.

In one optional embodiment, when there is a slope at the bottom of the target water region, based on an ascending direction of the slope (namely, an upward direction of a slope surface), a plurality of paths parallel to the longest side of the bottom of the target water region are determined as the planned paths for the bottom of the target water region; or a plurality of paths parallel to the shortest side of the bottom of the target water region are determined as the planned paths for the bottom of the target water region; or a plurality of paths perpendicular to the longest side of the bottom of the target water region are determined as the planned paths for the bottom of the target water region; or a plurality of paths perpendicular to the shortest side of the bottom of the target water region are determined as the planned paths for the bottom of the target water region.

In one specific embodiment, as shown in FIG. 6, there is a slope at the bottom of the target water region, and path planning may be performed based on an ascending direction of the slope (for example, the ascending direction is a direction of EF shown in the figure). A projected direction corresponding to the ascending direction is obtained by projecting the ascending direction on a plane on which the bottom of the target water region is located. For example, a projected direction of E'F' is obtained by projecting the direction of EF in FIG. 6 on the plane on which the bottom of the target water region is located. Based on an included angle between the projected direction and the longest side or the shortest side of the bottom of the target water region, the plurality of paths parallel to the longest side of the bottom of the target water region may be determined as the planned paths for the bottom of the target water region, or the plurality of paths parallel to the shortest side of the bottom of the target water region may be determined as the planned paths for the bottom of the target water region. In FIG. 6, the ascending direction of EF is parallel to a plane on which Y, W, T, and Q are located, and the projected direction of E'F' corresponding to the ascending direction of EF is parallel to a projection of the longest side TQ. In this case, in FIG. 6, the included angle between the projected direction of E'F' and the projection of the longest side is 0°. Therefore, the planned path for the bottom of the target water region shown in the figure is perpendicular to the longest side TQ.

In one specific embodiment, when the included angle between the projected direction and the longest side is less than or equal to a first preset angle threshold, the plurality of paths perpendicular to the longest side are determined as the planned paths for the bottom of the target water region; or when the included angle between the projected direction and the longest side is greater than the first preset angle threshold, the plurality of paths parallel to the longest side of the bottom of the target water region are determined as the planned paths for the bottom of the target water region; or when the included angle between the projected direction and the shortest side is less than or equal to a second preset angle threshold, the plurality of paths perpendicular to the shortest side of the bottom of the target water region are determined as the planned paths for the bottom of the target water region; or when the included angle between the projected direction and the shortest side is greater than the second preset angle threshold, the plurality of paths parallel to the shortest side of the bottom of the target water region are determined as the planned paths for the bottom of the target water region.

For example, the first preset angle threshold and the second preset angle threshold may be set based on an actual situation, and the first preset angle threshold and the second preset angle threshold may be equal or unequal. The slope shown in FIG. 6 is used as an example. If the included angle between the projected direction of E'F' corresponding to the ascending direction of the slope and the longest side is 0° and less than the first preset angle threshold (which is assumed to be 45°), the planned path is perpendicular to the longest side; or if the included angle between the projected direction of E'F' corresponding to the ascending direction of the slope shown in FIG. 6 and the shortest side is 90° and greater than the second preset angle threshold (which is assumed to be 40°), the planned path is parallel to the shortest side. In this embodiment, the projected direction corresponding to the ascending direction of the slope is obtained by projecting the ascending direction of the slope on the plane on which the bottom of the target water region is located, and path planning is performed based on the included angle between the projected direction and the longest side or the shortest side. This can reduce an amount of sliding of the cleaning device on the slope and prevent the cleaning device from sliding on the slope.

In one optional embodiment, the performing path planning on the bottom of the target water region based on the contour map to obtain a planned path for the bottom of the target water region includes: segmenting a connected component from the contour map to obtain a plurality of segmented regions in the contour map; performing path planning on each of the plurality of segmented regions to obtain a planned path for each segmented region, where the planned path for each segmented region includes a plurality of round-trip parallel paths, and the planned paths for each segmented region cover the segmented region; and determining the plurality of planned paths corresponding to each segmented region as the planned paths for the bottom of the target water region. Specifically, the connected component in the contour map is determined. The connected component generally refers to an image region including foreground pixels that have a same pixel value and are adjacent in an image. Connected component analysis means identifying and labeling each connected component in the image. The contour map may be segmented into a plurality of segmented regions through connected component analysis.

In one specific embodiment, the connected component may be segmented from the contour map through connected component analysis to obtain the plurality of segmented regions in the contour map. The contour map of the bottom of the target water region shown in FIG. 7 is used as an example. Region segmentation is performed on the contour map of the bottom of the target water region shown in the figure. A connected component is considered as a segmented region. The contour map shown in FIG. 7 may be segmented into regions A, B, and C. In this embodiment, because the bottom of the target water region in an actual scenario may be of various shapes, the contour map of the bottom of the target water region is segmented into a plurality of regions through connected component analysis, and path planning is performed on each segmented region. This can improve path planning efficiency.

For example, the performing path planning on each of the plurality of segmented regions to obtain a planned path for each segmented region includes: performing the following operations on each of the plurality of segmented regions, where a segmented region on which the following operations are performed is referred to as a current segmented region: determining a shape of the current segmented region, where the shape of the current segmented region is at least one of a polygon, a circle, or an ellipse; and performing path planning on the current segmented region based on the shape of the current segmented region to obtain a planned path for the current segmented region. In the actual scenario, most target water regions are quadrilateral. In a special case, there is a target water region in a shape of a circle, an ellipse, a triangle, a polygon, or the like. Because the contour map is a map of the bottom of the target water region, a shape of a segmented region obtained by segmenting the contour map may be in a shape of a circle, an ellipse, a triangle, a polygon, or the like.

When the current segmented region is a polygonal region, a longest side and a shortest side of the current segmented region are determined. A plurality of paths parallel to the longest side of the current segmented region are determined as the planned paths for the current segmented region; or a plurality of paths parallel to the shortest side of the current segmented region are determined as the planned paths for the bottom of the target water region; or a plurality of paths perpendicular to the longest side of the current segmented region are determined as the planned paths for the bottom of the target water region; or a plurality of paths perpendicular to the shortest side of the current segmented region are determined as the planned paths for the bottom of the target water region.

When there is a slope in the current segmented region, an ascending direction of the slope in the current segmented region is projected on a plane on which the bottom of the target water region is located to obtain a projected direction corresponding to the ascending direction of the slope. When an included angle between the projected direction and the longest side of the current segmented region is less than or equal to a third preset angle threshold, the plurality of paths perpendicular to the longest side of the current segmented region are determined as the planned paths for the current segmented region; or when the included angle between the projected direction and the longest side of the current segmented region is greater than the third preset angle threshold, the plurality of paths parallel to the longest side of the current segmented region are determined as the planned paths for the bottom of the target water region; or when an included angle between the projected direction and the shortest side of the current segmented region is less than or equal to a fourth preset angle threshold, the plurality of paths perpendicular to the shortest side of the current segmented region are determined as the planned paths for the bottom of the target water region; or when the included angle between the projected direction and the shortest side of the current segmented region is greater than the fourth preset angle threshold, the plurality of paths parallel to the shortest side of the current segmented region are determined as the planned paths for the bottom of the target water region.

The third preset angle threshold and the fourth preset angle threshold may be set based on an actual situation, and the third preset angle threshold and the fourth preset angle threshold may be equal or unequal. For example, the third preset angle threshold may be 30°, 45°, or the like, and the fourth preset angle threshold may be 30°, 40°, or the like. The projected direction corresponding to the ascending direction of the slope is obtained by projecting the ascending direction of the slope on the plane on which the bottom of the target water region is located, and path planning is performed based on the included angle between the projected direction and the longest side or the shortest side. This can reduce an amount of sliding of the cleaning device on the slope and prevent the cleaning device from sliding on the slope.

The shape of the bottom of the target water region is determined based on the contour map. When the shape of the bottom of the target water region is a circle or an ellipse, a target diameter of the bottom of the target water region is determined, and a plurality of paths parallel to the target diameter are determined as the planned paths for the bottom of the target water region. When the shape of the bottom of the target water region is a circle, any straight line is determined, and a plurality of paths parallel to the straight line are determined as the planned paths for the bottom of the target water region. When the shape of the bottom of the target water region is an ellipse, a longest diameter of the ellipse is determined based on a minimum bounding rectangle of the ellipse, and the longest diameter is determined as the target diameter. Similarly, when the current segmented region is a circular or elliptical region, the planned path for the current segmented region is determined in a same manner.

S36: Control the cleaning device to move along the planned path for the bottom of the target water region and clean the bottom of the target water region in a moving process.

In one embodiment, the method further includes: when the planned paths for the bottom of the target water region are parallel to the longest side or the shortest side of the bottom of the target water region, determining a path closest to the longest side or the shortest side of the bottom of the target water region as a first starting path on which the cleaning device moves, determining an endpoint of the first starting path as a first starting position at which the cleaning device moves, controlling the cleaning device to move from the first starting position until all planned paths for the bottom of the target water region are traversed or it is detected that there is an obstacle within a preset range of the cleaning device, and when all planned paths for the bottom of the target water region have been traversed or it is detected that there is the obstacle within the preset range of the cleaning device, controlling the cleaning device to stop moving.

A first path and a second path are two adjacent paths in the plurality of segmented regions. The cleaning device is controlled to move from a starting point of the first path to an ending point of the first path. An endpoint of the second path is closest to the ending point of the first path, and the endpoint is determined as a starting point of the second path. The cleaning device is controlled to move from the ending point of the first path to the starting point of the second path, and the cleaning device is controlled to move from the starting point of the second path to an ending point of the second path.

Controlling the cleaning device to move from the ending point of the first path to the starting point of the second path includes, but is not limited to, determining a target angle based on an included angle between the first path and a connection line between the ending point of the first path and the starting point of the second path; determining a distance between the ending point of the first path and the starting point of the second path as a target distance; and when the cleaning device reaches the ending point of the first path, controlling the cleaning device to rotate by the target angle and move for the target distance to reach the starting point of the second path.

In the above manner, the cleaning device moves from the first planned path based on the planned paths and starts to perform cleaning along the planned paths. The pool shown in FIG. 6 is used as an example. Dashed lines in the figure are the planned paths, and the cleaning device is controlled to move along the planned paths in a direction from E to F in the figure, to move from an edge of TH to an edge of QG of the bottom of the target water region. EF indicates the slope at the bottom of the target water region. When the cleaning device traverses all the planned paths, the cleaning device finishes cleaning the bottom of the target water region.

A manner of cleaning the bottom of the target water region by using the cleaning device includes: constructing the contour map of the bottom of the target water region based on the edge information of the bottom of the target water region; performing region segmentation on the contour map to obtain the plurality of segmented regions in the contour map; performing path planning on each of the plurality of segmented region to obtain a planned path for each segmented region; and controlling the cleaning device to move along the planned path. In this way, the cleaning device can move along the planned path to clean the bottom of the target water region. Therefore, a problem of low efficiency in manually cleaning the target water region can be resolved, and the cleaning efficiency of the target water region can be improved.

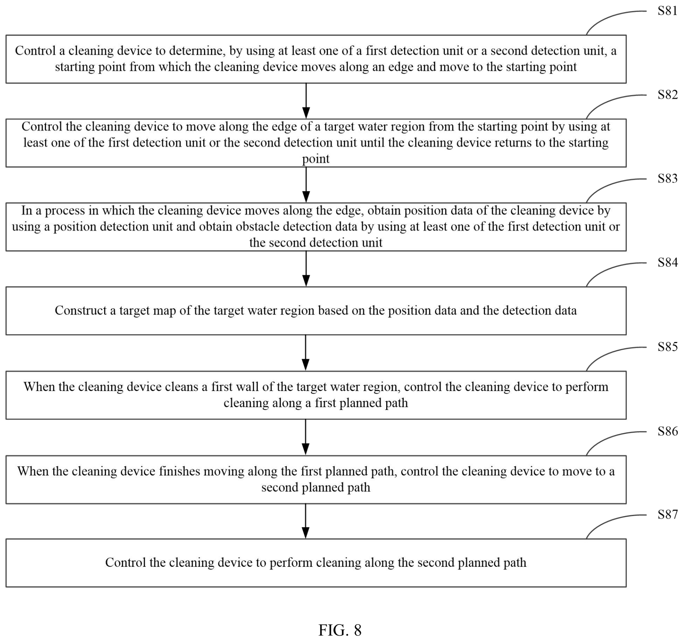

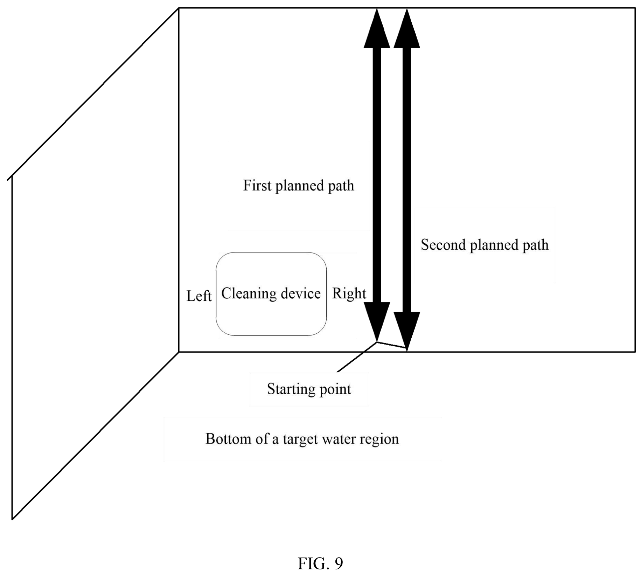

Refer to FIG. 8 and FIG. 9. FIG. 8 is a schematic flowchart of a fourth embodiment of a cleaning device control method according to this application. FIG. 9 is a schematic diagram of a first planned path and a second planned path according to an embodiment of this application. The method includes the following steps.

S81: Control a cleaning device to determine, by using at least one of a first detection unit or a second detection unit, a starting point from which the cleaning device moves along an edge and move to the starting point.

S82: Control the cleaning device to move along the edge of a target water region from the starting point by using at least one of the first detection unit or the second detection unit until the cleaning device returns to the starting point.

S83: In a process in which the cleaning device moves along the edge, obtain position data of the cleaning device by using a position detection unit and obtain obstacle detection data by using at least one of the first detection unit or the second detection unit.

S84: Construct a target map of the target water region based on the position data and the detection data.

In one embodiment, the target map includes a map of a wall of the target water region. For specific implementation of steps S81 to S84, refer to related descriptions of the first embodiment of the robot control method provided in this application. Details are not described herein again.

S85: When the cleaning device cleans a first wall of the target water region, control the cleaning device to perform cleaning along a first planned path.

In one embodiment, the target water region may be a polygonal swimming pool (namely, a swimming pool including a plurality of walls). The first wall may be any wall of the swimming pool. The first planned path may be located on a wall or the bottom of the swimming pool or a water surface. An example in which the first planned path is located on the first wall is used. The first planned path may be parallel to a connection line between the first wall and a second wall. It may be understood that the first planned path may alternatively not be parallel to the connection line between the first wall and the second wall.

In one embodiment, the cleaning device is controlled to move along the first planned path in a first direction. The first direction may be a direction from the bottom of the swimming pool to the water surface of the target water region. A pressure sensor provided on the cleaning device is configured to detect whether the cleaning device reaches the water surface. If the cleaning device reaches the water surface of the target water region, the cleaning device is controlled to move along the first planned path in a second direction. The second direction is a direction from the water surface of the target water region to the bottom of the swimming pool. Alternatively, when an obstacle is detected in a process in which the cleaning device moves along the first planned path in the first direction, the cleaning device is controlled to move along the first planned path in the second direction. Certainly, at adjacent moments, a moving path of the cleaning device in the first direction and a moving path of the cleaning device in the second direction may partially overlap. In other words, after moving to an ending point in the first direction, the cleaning device translates for a specific distance in a direction perpendicular to the first direction, turns around or moves backward, and continues to move in the second direction. The translation distance is generally less than a width of the cleaning device or less than a width of a cleaning member of the cleaning device.

When the cleaning device moves to the water surface along the first planned path in the first direction, the cleaning device may be controlled to turn around and move along the first planned path in the second direction, or the cleaning device may be controlled to move backward along the first planned path, so that the cleaning device moves along the first planned path in the second direction. The cleaning device moves backward without turning around. Therefore, time can be reduced. The cleaning device turns around, so that time consumption can be reduced.

When it is detected that the cleaning device reaches the water surface of the swimming pool, after the cleaning device is controlled to stay for preset duration (the preset duration may be determined based on an actual situation, for example, 3 seconds) at a position at which the cleaning device reaches the water surface, the cleaning device is controlled to move along the first planned path in the second direction. The cleaning device is provided with a cleaning roller brush (the cleaning roller brush may be provided at a front portion of the cleaning device). When the cleaning device reaches the water surface, the cleaning roller brush at the front portion of the cleaning device is located at a waterline, so that the waterline can be cleaned within the preset duration for which the cleaning device stays at the position.

In a process of moving from the bottom of the swimming pool to the water surface along the first planned path, water pressure in the target water region is collected by the pressure sensor, and a threshold may be preset (a specific value is set based on an actual situation). When pressure sensing data collected by the pressure sensor is less than or equal to the preset threshold, it is determined that the cleaning device moves to the water surface. In other embodiments, a sensor, for example, a moving wheel, a code disk, or an IMU, that can record a moving distance of the cleaning device may be provided to determine whether the cleaning device moves to the water surface, or a sensor for detecting whether some components of the cleaning device are exposed at the water surface may be provided to determine whether the cleaning device moves to the water surface. When the cleaning device moves to the water surface, the cleaning device moves from the water surface to the bottom of the swimming pool along the first planned path. When the cleaning device moves to the bottom of the swimming pool, it is determined that the cleaning device finishes moving along the first planned path, that is, the cleaning device finishes performing cleaning along the first planned path.

Based on this step, because the cleaning device moves twice along the same path in two different directions, cleaning can be performed twice along the path. This improves cleaning strength and improves cleanliness of the swimming pool.

S86: When the cleaning device finishes moving along the first planned path, control the cleaning device to move to a second planned path.

The second planned path is parallel to the first planned path, and the second planned path is adjacent to the first planned path.

When the cleaning device is controlled to move to the bottom of the swimming pool along the first planned path in the second direction, it is determined that the cleaning device finishes moving along the first planned path. A target sensor (the target sensor may be a sensor capable of detecting a collision, for example, an inertial measurement unit or a collision sensor, or may be a sensor capable of detecting a distance, for example, an ultrasonic sensor or a laser sensor) may be provided on the front portion or a rear portion of the cleaning device. The target sensor provided on the front portion of the cleaning device may be configured to detect, when the cleaning device moves forward, whether the front portion of the cleaning device is hit or whether there is an obstacle in front of the cleaning device. The target sensor provided on the rear portion of the cleaning device may be configured to detect, when the cleaning device moves backward, whether the rear portion of the cleaning device is hit or whether there is an obstacle at the rear of the cleaning device.

For example, the inertial measurement unit may determine, based on a sudden change in an acceleration, that the cleaning device collides with the bottom of the swimming pool or determine that the cleaning device collides with an obstacle. If the target sensor detects that the cleaning device collides with the bottom of the swimming pool, it is determined that the cleaning device reaches the bottom of the swimming pool. In this case, the cleaning device needs to be controlled to change a path, and the cleaning device is controlled to move to the second planned path adjacent to the first planned path to finish performing cleaning along the second planned path. When a distance sensor (for example, an ultrasonic sensor) detects that a distance between the cleaning device and the bottom of the swimming pool reaches a preset distance threshold (which may be set based on an actual situation, for example, 0.2 meters or 0.3 meters), it is determined that the cleaning device reaches the bottom of the swimming pool. In other words, when the cleaning device is close to the bottom of the swimming pool, but does not collide with the bottom of the swimming pool, the cleaning device finishes moving along the first planned path and moves to the second planned path, to finish performing cleaning along the second planned path.

S87: Control the cleaning device to perform cleaning along the second planned path.

For example, the cleaning device may be controlled to move to the second planned path in the following manner. As shown in FIG. 9, the cleaning device is controlled to rotate by a first preset angle. The first preset angle may be set based on an actual situation, for example, 10° or 15°. After the cleaning device rotates by the first preset angle, the cleaning device is controlled to move for a preset distance. The preset distance may be set based on actual situation, for example, 0.2 meters or 0.3 meters. A position at which the cleaning device is located after moving for the preset distance is determined as a starting point of the second planned path. The second planned path shown in FIG. 9 is located to the left of the first planned path. Alternatively, the second planned path may be located to the right of the first planned path. Cleaning is repeatedly performed in a manner of performing cleaning along the first planned path and the second planned path until cleaning of the first wall is completed.

The cleaning device may alternatively be controlled to move to the second planned path in the following manner. When the cleaning device finishes moving along the first planned path, the cleaning device is controlled to move for a second preset distance along the first planned path in the first direction. After the cleaning device moves for the second preset distance, the cleaning device is controlled to rotate by a second preset angle and move for a third preset distance to reach the starting point of the second planned path.

The second preset distance may be set based on an actual situation, for example, 0.1 meters or 0.2 meters. The third preset distance may be set based on an actual situation, for example, 0.2 meters or 0.3 meters. After the cleaning device finishes moving along the first planned path, the cleaning device moves upward for the second preset distance along the first planned path, rotates by the second preset angle, and then moves for the third preset distance to reach the starting point of the second planned path. The cleaning device moves upward for the second preset distance to leave space for the cleaning device to rotate.

A target sensor may be provided on a left side or a right side of the cleaning device, and whether the cleaning device collides with a wall is detected by the target sensor. When the cleaning device finishes cleaning the first wall, the cleaning device is controlled to move to a second wall adjacent to the first wall. Specifically, whether the cleaning device collides with the second wall is detected by the target sensor provided on the cleaning device. When it is determined that the cleaning device collides with the second wall, it is determined that the cleaning device finishes cleaning the first wall, and the cleaning device is controlled to move to the second wall to clean the second wall. Alternatively, whether there is an obstacle to the left or the right of the cleaning device is detected by the target sensor. When it is determined that there is an obstacle, it is determined that the cleaning device finishes cleaning the first wall, and the cleaning device is controlled to move to the second wall to clean the second wall.

The cleaning device is controlled to move from the first wall to the second wall in the following manner: controlling the cleaning device to move from the first wall to the bottom of the swimming pool, and after the cleaning device reaches the bottom of the swimming pool, controlling the cleaning device to move to the second wall. After the cleaning device reaches the second wall, the cleaning device moves in a manner in the above embodiment to clean the second wall.

For example, as shown in FIG. 9, the second planned path is located to the left of the first planned path, and the second wall is located to the left of the first wall. In this case, whether the left side of the cleaning device is hit is detected by the target sensor. When it is determined that the left side of the cleaning device is hit, it is determined that the cleaning device finishes cleaning the first wall, and the cleaning device is controlled to move to the second wall located to the left of the cleaning device to clean the second wall. Alternatively, whether there is an obstacle to the left of the cleaning device is detected by the target sensor. When it is determined that there is an obstacle, it is determined that the cleaning device finishes cleaning the first wall, and the cleaning device is controlled to move to the second wall to clean the second wall.

In another optional embodiment, the second wall may be located to the right of the first wall. For a manner of controlling the cleaning device to move from the first wall to the second wall, refer to descriptions of the second wall located to the left of the first wall. Details are not described herein again.

The manner of controlling the cleaning device to clean a wall of the swimming pool includes: controlling the cleaning device to move along the first planned path sequentially in two opposite directions; when the cleaning device finishes moving along the first planned path, controlling the cleaning device to move to the second planned path, where the second planned path is parallel to the first planned path, and the second planned path is adjacent to the first planned path; and controlling the cleaning device to move along the second planned path sequentially in two opposite directions. In this way, the cleaning device can move along the above paths to clean a wall of the swimming pool. Therefore, a problem of low efficiency in manually cleaning the swimming pool can be resolved, and the cleaning efficiency of the swimming pool can be improved.

In one embodiment, before the cleaning device cleans the first wall of the target water region, the cleaning device is located at the bottom of the target water region, and the method further includes: determining a variation of a current yaw angle of the cleaning device at a current position point relative to a starting yaw angle of the cleaning device at the starting point from which the cleaning device moves along the edge of the target water region; and when the variation is greater than a preset yaw angle, taking the current position point as a wall climbing point, and controlling the cleaning device to climb from the wall climbing point to the first wall to clean the first wall; or when the variation is not greater than the preset yaw angle, controlling the cleaning device to continue to move along the edge to a position point at which the variation of the current yaw angle relative to the starting yaw angle is greater than the preset yaw angle. It may be understood that in a process of cleaning the first wall, if the cleaning device encounters an obstacle, such as a wall light, the cleaning device may move along the wall to the bottom of the target water region to change a cleaning path.

In one embodiment, the method further includes: when it is determined that the cleaning device finishes cleaning the first wall, controlling the cleaning device to move to the second wall adjacent to the first wall, and after the cleaning device moves to the second wall, controlling the cleaning device to clean the second wall from a junction line of the first wall and the second wall and clean the second wall along the junction line. The cleaning device is controlled to perform cleaning along the junction line, so that coverage over corners of the wall can be improved, and missed regions to be cleaned can be reduced. The cleaning device is controlled to move from the first wall to the second wall in the following manner: controlling the cleaning device to move from the first wall to the bottom of the target water region, and after the cleaning device reaches the bottom of the target water region, controlling the cleaning device to move from the bottom of the target ware region to the second wall; or controlling the cleaning device to move from the first wall to the second wall via the junction line, that is, controlling the cleaning device to directly move between the two walls.

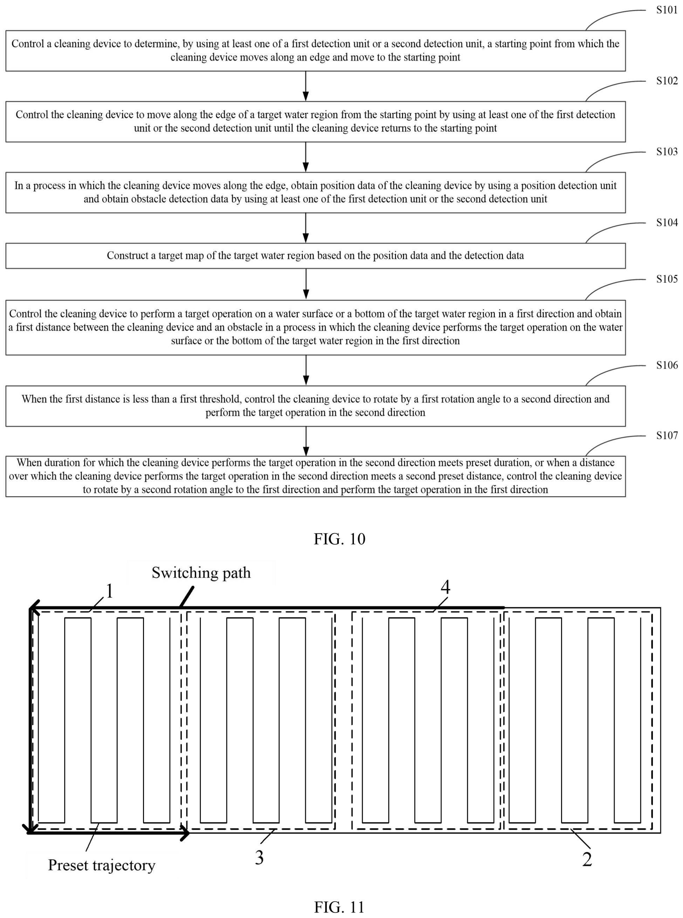

Refer to FIG. 10 and FIG. 11. FIG. 10 is a schematic flowchart of a fifth embodiment of a cleaning device control method according to this application. FIG. 11 is a schematic diagram of a water surface cleaning trajectory of a target water region according to an embodiment of this application. The method includes the following steps.

S101: Control a cleaning device to determine, by using at least one of a first detection unit or a second detection unit, a starting point from which the cleaning device moves along an edge and move to the starting point.

S102: Control the cleaning device to move along the edge of a target water region from the starting point by using at least one of the first detection unit or the second detection unit until the cleaning device returns to the starting point.

S103: In a process in which the cleaning device moves along the edge, obtain position data of the cleaning device by using a position detection unit and obtain obstacle detection data by using at least one of the first detection unit or the second detection unit.

S104: Construct a target map of the target water region based on the position data and the detection data.

For specific implementation of steps S101 to S104, refer to related descriptions of the first embodiment of the robot control method provided in this application. Details are not described herein again.

S105: Control the cleaning device to perform a target operation on a water surface or the bottom of the target water region in a first direction and obtain a first distance between the cleaning device and the obstacle in a process in which the cleaning device performs the target operation on the water surface or the bottom of the target water region in the first direction.

In one embodiment, the first distance is a distance between a front portion of the cleaning device and the obstacle, and the target water region includes, but is not limited to, a swimming pool, an ornamental reservoir, a wild pool, and the like. The cleaning device may move on the water surface or the bottom of the target water region in the first direction based on a preset trajectory. The preset trajectory includes at least one of an S-shaped trajectory, an N-shaped trajectory, a bow-shaped trajectory, a square spiral trajectory, or a straight trajectory. The target operation may include, but is not limited to, cleaning, disinfection, and the like. In this embodiment, the target operation is performed after the target map is constructed. In some embodiments, construction of the target map and the target operation may alternatively be performed simultaneously, that is, in a process of controlling the cleaning device to move along the edge of the target water region, the map is constructed, and the target operation is also performed.

The obstacle includes at least one of a physical obstacle or a virtual obstacle. The virtual obstacle may be a boundary of divisions of the water region, a virtual wall, or the like. The physical obstacle may include a wall of the target water region.

In one embodiment, in the process in which the cleaning device performs the target operation on the water surface or the bottom of the target water region in the first direction, the method further includes: obtaining a current moving direction of the cleaning device in real time in the process in which the cleaning device performs the target operation on the water surface or the bottom of the target water region in the first direction; when the current moving direction deviates from the first direction, adjusting a moving angular velocity of the cleaning device; and adjusting the current moving direction based on the adjusted moving angular velocity to control the cleaning device to perform the target operation in the first direction. In the above embodiment, the moving angular velocity may be 1 rad/s or 1.5 rad/s. Certainly, the above moving angular velocity is only an example. The actual moving angular velocity may be any appropriate angular velocity determined based on an adjustment requirement of the cleaning device. According to the above embodiment, when it is determined that the current moving direction of the cleaning device deviates, the angular velocity is output in time to adjust the current moving direction of the cleaning device. This can effectively improve stability of an operation route of the cleaning device.

In one embodiment, before the obtaining a current moving direction of the cleaning device in real time in the process in which the cleaning device performs the target operation on the water surface or the bottom of the target water region in the first direction, the method further includes: when an angular deviation between the current moving direction and the first direction is greater than or equal to a second threshold, determining that the current moving direction deviates from the first direction. In the above embodiment, the second threshold may be 20°, 30°, or 25°. Certainly, the above second threshold is only an example. The second threshold may be any appropriate angle value that allows a deviation in the moving direction of the cleaning device. Whether the current moving direction of the cleaning device deviates is determined accurately and easily based on a preset threshold. This improves operating efficiency of the cleaning device.

S106: When the first distance is less than a first threshold, control the cleaning device to rotate by a first rotation angle to a second direction and to perform the target operation in the second direction.

In one embodiment, the first threshold may be any length within a range from 20 cm to 30 cm, the length is slightly less than an operation width of the cleaning device, and the operation width of the cleaning device may range from 30 cm to 35 cm. This can increase an actual operation coverage area of the cleaning device in the target water region and increase coverage of an actual operation range of the cleaning device over the target water region. That the first distance is less than the first threshold may indicate that the cleaning device collides with an obstacle or is about to collide with an obstacle.

In one embodiment, determining the first rotation angle of the cleaning device when the first distance is less than the first threshold includes: determining a first preset angle as the first rotation angle when a pointing direction of the current moving direction is a first pointing direction, and determining a second preset angle as the first rotation angle when the pointing direction of the current moving direction is a second pointing direction. The first direction includes the first pointing direction and the second pointing direction. The first pointing direction is opposite to the second pointing direction. The first preset angle and the second preset angle correspond to opposite directions. In the above embodiment, the first pointing direction and the second pointing direction are opposite to each other. An example in which the target water region is a rectangular swimming pool, and a longer side of the swimming pool runs east-west is used. In this case, the first pointing direction may be a direction from west to east, and the second pointing direction may be a direction from east to west. Further, when a coverage direction in which the cleaning device cleans the water surface or the bottom of the target water region is from south to north, if the cleaning device moves in a direction from west to east, the first rotation angle is 90° counterclockwise (in a top view of the swimming pool), that is, the cleaning device rotates toward the north by 90°; and if the cleaning device moves in a direction from east to west, the first rotation angle is 90° clockwise, that is, the cleaning device rotates toward the north by 90°. According to the above embodiment, a next steering angle is determined based on a moving direction of the cleaning device. This can effectively reduce difficulty of handling a complex water region and improve cleaning efficiency.

In one embodiment, the cleaning device may move in the target water region based on a preset moving route, for example, the bow-shaped trajectory or the S-shaped trajectory. In a process in which the cleaning device moves in the target water region substantially along the bow-shaped trajectory, a direction corresponding to the first rotation angle is consistent with that corresponding to the second rotation angle, for example, 90° clockwise or 90° counterclockwise. The first direction may be any direction in the target water region and perpendicular to the second direction. For example, when the target water region is a rectangular pool, the first direction may be a direction of a longer side of the rectangular pool and include two directions along the longer side, and the second direction may be a direction of a shorter side of the rectangular pool. The preset duration may be 2s, 3s, or 2.5s. The preset duration is related to a speed at which the cleaning device moves in the target water region. A distance over which the cleaning device moves in the second direction within the preset duration is slightly less than the operation width of the cleaning device. For example, the distance over which the cleaning device moves in the second direction within the preset duration is 1/2 to 1/3 of the operation width of the cleaning device. This can also increase the actual operation coverage area of the cleaning device in the target water region and increase the coverage rate of the actual operation range of the cleaning device over the target water region.

S107: When duration for which the cleaning device performs the target operation in the second direction meets preset duration, or when a distance over which the cleaning device performs the target operation in the second direction meets a second preset distance, control the cleaning device to rotate by a second rotation angle to the first direction and to perform the target operation in the first direction.

Each of the first direction and the second direction may be a moving direction determined based on the target map, or after the cleaning device is controlled to move in the target water region along an edge of the target water region by one round, a moving direction in which operation duration exceeds a preset threshold is determined as the first direction, and a direction perpendicular to the first direction is determined as the second direction.

Optionally, when the cleaning device collides with the obstacle, the cleaning device is controlled to rotate by the first rotation angle to perform the target operation in the second direction. Optionally, when the distance over which the cleaning device performs the target operation in the second direction meets a preset distance, the second rotation angle of the cleaning device is determined, and the cleaning device is controlled to rotate by the second rotation angle to perform the target operation in the first direction. The rotation angle and the moving direction of the cleaning device are continuously adjusted based on a distance between the cleaning device and the obstacle, so that the cleaning device can move in a planned manner. This can prevent the cleaning device from randomly selecting a moving direction when the cleaning device collides with a wall of the target water region.

In one embodiment, the second rotation angle of the cleaning device may be determined in the following manner: determining a first rotation direction corresponding to the first rotation angle, and determining the second rotation angle based on the first rotation direction and the first rotation angle. In the above embodiment, determining the first rotation direction corresponding to the first rotation angle means when the cleaning device moves in the direction of the shorter side, calculating a rotation direction in which the cleaning device turns to the longer side. For details, refer to descriptions of a rotation direction in which the cleaning device turns from a previous longer side to a current shorter side. Two rotation directions are consistent.

In one embodiment, after the controlling the cleaning device to rotate by a first rotation angle to a second direction and to perform the target operation in the second direction when the first distance is less than a first threshold, the method further includes: obtaining a second distance between the cleaning device and the obstacle, and when the second distance is less than a third threshold, controlling the cleaning device to stop moving to stop performing the target operation. In the above embodiment, the second distance is a distance between the front portion of the cleaning device and the obstacle, and the third threshold may be an appropriate value less than the operation width of the cleaning device. In the above embodiment, an appropriate occasion on which the cleaning device ends a cleaning process is determined by setting the third threshold, thereby effectively improving overall cleaning efficiency.

In one embodiment, before the obtaining a first distance between the cleaning device and the obstacle in a process in which the cleaning device performs the target operation on the water surface or the bottom of the target water region in the first direction, the cleaning device is controlled to perform at least one of the following in the target water region: performing the target operation on the water surface or the bottom of the target water region along the edge of the target water region; moving on the water surface or the bottom of the target water region along the edge of the target water region; or constructing the map of the target water region after moving in the target water region along the edge of the target water region. According to the above embodiment, the cleaning device moves along the edge first and then cleans the target water region, so that the cleaning device can effectively adapt to different target water regions. This reduces complexity of performing full-coverage cleaning on a water region.

In one embodiment, before the obtaining a first distance between the cleaning device and the obstacle in a process in which the cleaning device performs the target operation on the water surface or the bottom of the target water region in the first direction, the method further includes: obtaining a map of the cleaning device, where the map is constructed by the cleaning device in a process of operating in the target water region, or the map is obtained from a pre-constructed map; and determining the moving direction of the cleaning device based on the map. The moving direction includes the first direction and the second direction, or after the cleaning device is controlled to move in the target water region along the edge of the target water region by one round, a moving direction in which operation duration exceeds a preset threshold is determined as the first direction, and a direction perpendicular to the first direction is determined as the second direction. In the above embodiment, the map may be a map of the water surface or a map of the bottom of the target water region. The constructed map may be constructed by the cleaning device in the process of performing the target operation in the target water region, or may be constructed when the cleaning device only operates in the target water region without performing the target operation. For example, when the target water region is a rectangular swimming pool, a direction of a longer side of the rectangular swimming pool may be determined as the first direction in the map, a direction of a shorter side of the rectangular swimming pool may be determined as the second direction, and a corner of the rectangular swimming pool in the map may be determined as the starting point from which the cleaning device operates. That "a moving direction in which operation duration exceeds a preset threshold is determined as the first direction" means that a direction in which the cleaning device moves straight along the wall for the longest time in a process of moving along an edge of the water surface or the pool bottom is determined as the first direction. There may be one or a plurality of moving directions in which operation duration exceeds the preset threshold. When there are a plurality of moving directions in which operation duration exceeds the preset threshold, a moving direction may be randomly selected as the first direction. For example, when the target water region is a rectangular swimming pool, a direction in which the cleaning device moves straight for the longest time in a process of moving along an edge of the swimming pool by one round is a direction of a longer side. For example, when the target water region is a circular pool, there are a plurality of straight moving directions in which operation duration is the same in a process of moving along an edge of the swimming pool by one round. In this case, a moving direction may be randomly selected as the first direction.

A process of cleaning a water surface of the rectangular swimming pool is used as an example. After entering the rectangular swimming pool, the cleaning device may first perform full-coverage cleaning on the water surface and then perform cleaning along an edge of the rectangular swimming pool. A process in which the cleaning device performs full-coverage cleaning on the water surface includes the following steps. A direction of a longer side of the rectangular swimming pool and a corner of the rectangular swimming pool are determined based on a map of the rectangular swimming pool, and the cleaning device moves to the corner of the rectangular swimming pool and rotates to the direction of the longer side. The cleaning device moves from the corner of the rectangular swimming pool in the direction of the longer side and cleans the water surface of the swimming pool on the way. The cleaning device continuously detects a distance between the cleaning device and a wall in front of the cleaning device in a process of moving in the direction of the longer side. When the cleaning device detects that the distance between the cleaning device and the wall in front of the cleaning device is less than the first threshold, the cleaning device calculates a first azimuth, namely, an angle by which the cleaning device needs to rotate to a direction of a shorter side. The cleaning device rotates by the first azimuth to the direction of the shorter side and moves in the direction of the shorter side. When the cleaning device moves in the direction of the shorter side for preset duration, the cleaning device calculates a second azimuth, namely, an angle by which the cleaning device needs to rotate to the direction of the longer side. The cleaning device continuously detects a distance between the cleaning device and a wall of the swimming pool in front of the cleaning device in a process of moving in the direction of the shorter side. When the distance is less than a second threshold, the cleaning device ends the process of performing full-coverage cleaning on the water surface, or when the distance is greater than the second threshold, the cleaning device is controlled to move to the corner of the rectangular swimming pool based on the second azimuth and rotate to the direction of the longer side, and the above process is repeated. The cleaning device ends the process of performing full-coverage cleaning on the water surface.

In one embodiment, before the controlling the cleaning device to perform a target operation on a water surface or the bottom of the target water region in a first direction, the method further includes: when an initial position at which the cleaning device reaches the water surface or the bottom of the target water region is not at the edge of the target water region, controlling the cleaning device to move to the edge of the target water region, where that the initial position is not at the edge of the target water region indicates that a distance between the initial position and the wall is greater than a third preset distance; and after the cleaning device reaches the edge, controlling the cleaning device to move from the edge in the first direction based on a preset trajectory to perform the target operation.

In one embodiment, when the cleaning device performs planned cleaning on the water surface, that is, performs cleaning along a planned path, if the path is planned inappropriately, an external force (for example, wind) applied to the cleaning device on the water surface may cause a positioning error of the cleaning device, leading to severely missed cleaning. As a result, a cleaning effect is affected. To resolve this problem, the water surface may be divided into different regions, and polling cleaning is performed on the water surface in order from the edge to the middle, thereby reducing an impact caused by the external force. As shown in FIG. 11, the water surface may be divided into four regions. A region 1 and a region 2 are edge regions of the water surface, and a region 3 and a region 4 are middle regions of the water surface. The cleaning device may clean the water surface in order of the region 1, the region 2, the region 3, and the region 4. A position at which the cleaning device reaches the region 1 is a starting point for water surface cleaning. The cleaning device cleans the region 1 from the starting point based on a preset trajectory. After finishing cleaning the region 1, the cleaning device moves to the region 2 along the edge of the target water region to clean the region 2. A position at which the cleaning device finishes cleaning the region 1 may or may not be at the edge of the target water region. If the position is not at the edge of the target water region, the cleaning device may be controlled to move to a closest edge of the target water region and then move to the region 2 along the edge. Similarly, after finishing cleaning the region 2, the cleaning device is controlled to move to the region 3 along the edge. In one specific embodiment, the cleaning device may move from the region 2 to the region 3 along a switching path shown in FIG. 11. It may be understood that the present embodiment is only an example. In other embodiments, the water surface may be divided into regions in any manner based on a shape, a size, and other factors of the target water region, and the cleaning device may move between various regions of the water surface along any switching path, provided that it is ensured that the water surface is completely cleaned by the cleaning device. After water surface cleaning is finished, the cleaning device may be controlled to return to the starting point for water surface cleaning. Specifically, whether the cleaning device returns to the starting point for water surface cleaning may be determined based on a position and/or a posture of the cleaning device. If the cleaning device returns to the starting point for water surface cleaning, a head portion of the cleaning device may be controlled to face a wall of the target water region, and a propeller of the cleaning device is turned on, so that the cleaning device can remain to be close to the edge.

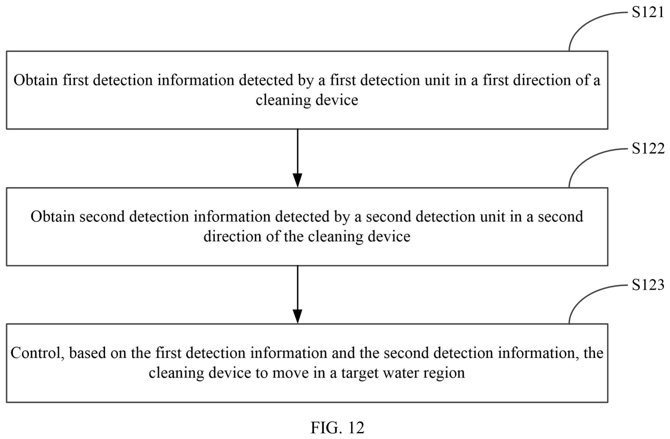

Refer to FIG. 12. FIG. 12 is a schematic flowchart of a sixth embodiment of a cleaning device control method according to this application. The method includes the following steps.

S121: Obtain first detection information detected by a first detection unit in a first direction of a cleaning device.

S122: Obtain second detection information detected by a second detection unit in a second direction of the cleaning device.

S123: Control, based on the first detection information and the second detection information, the cleaning device to move in a target water region.

In this embodiment, a moving direction of the cleaning device in the target water region may be determined. Motion of the cleaning device may be controlled based on the moving direction in a map construction process or in a cleaning process. The first detection information and the second detection information may be further used in the map construction process and data obtained by using an inertial measurement unit (IMU), a code disk, a depth sensor, and the like may be fused, to position the cleaning device in real time. In one embodiment, the first direction may be a forward direction of the cleaning device. A cleaning member may be provided in the first direction of the cleaning device and may filter water in the target water region to clean the water in the target water region. The cleaning member may alternatively be provided in the second direction (for example, a right side) of the cleaning device, and a wall of the target water region is cleaned by using the cleaning member. A cleaning manner of the cleaning device may be that a pumping apparatus draws liquid through a water inlet, debris and garbage in the liquid are filtered by a filter, and the filtered water is discharged through a water outlet. In this way, the liquid in the target water region is cleaned. An angle difference between a right angle and an included angle between the second direction and the first direction is less than a preset angle. The preset angle may be set as required. This is not specifically limited herein.

In one embodiment, each of the first detection unit and the second detection unit may be a sensor capable of measuring a distance, for example, an ultrasonic sensor, an infrared sensor, or a TOF (Time of Flight) sensor. The second direction may be a leftward direction or a rightward direction of the cleaning device. An example in which the second direction is the rightward direction is used. The second detection unit is provided on the right side of the cleaning device, and the cleaning member may further be mounted on the right side of the cleaning device. The first detection information may indicate a distance between the cleaning device and a first obstacle in the first direction. The second detection information may indicate a distance between the cleaning device and a second obstacle in the second direction. Each of the first obstacle and the second obstacle may be a wall.

In one embodiment, the controlling the cleaning device to move in a target water region includes at least one of the following: when a distance indicated by the first detection information between the cleaning device and a wall in front of the cleaning device in the first direction is less than a first preset distance, controlling the cleaning device to move toward a third direction away from the second direction, where the third direction is opposite to the second direction; or when a distance indicated by the second detection information between the cleaning device and a wall on a side of the cleaning device in the second direction is greater than a second preset value, controlling the cleaning device to deviate toward a preset direction to reduce the distance between the cleaning device and the wall on the side of the cleaning device in the second direction. The preset direction includes at least one of the second direction or a direction parallel to the second obstacle.

In the above solution, when the second direction is the rightward direction of the cleaning device, the third direction is the leftward direction of the cleaning device. The cleaning member may be provided on the right side or the left side of the cleaning device, and a wall of the target swimming pool is cleaned by using the cleaning member in a moving process of the cleaning device.

The first preset distance may be set based on an actual situation or based on a detection range (a blind zone) of the ultrasonic sensor, for example, may be one meter. When the first detection unit detects that the distance between the obstacle in front of the cleaning device and the cleaning device reaches the first preset distance, it indicates that the front portion of the cleaning device is close to the wall of the target water region. In this case, the cleaning device needs to be controlled to perform steering to avoid a collision.

Specifically, to enable the cleaning device to clean corners of the target water region more thoroughly, a second preset distance may be set. The second preset distance is less than the first preset distance. The controlling the cleaning device to move toward a third direction may include: when the distance between the cleaning device and the wall in front of the cleaning device in the first direction is less than or equal to the first preset distance, first controlling the cleaning device to decelerate, so that when the distance between the cleaning device and the wall in front of the cleaning device is equal to the second preset distance, a speed of the cleaning device is zero; and when the cleaning device is at a position at which the distance between the cleaning device and the wall in front of the cleaning device is equal to the second preset distance, controlling the cleaning device to rotate to the third direction, or controlling the cleaning device to move backward for a certain distance in a direction opposite to the first direction, and then controlling the cleaning device to rotate to the third direction; or when the distance between the cleaning device and the wall in front of the cleaning device in the first direction is less than or equal to the first preset distance, controlling the cleaning device to decelerate and controlling the cleaning device to rotate toward the third direction, so that when the second detection unit of the cleaning device detects obstacle information, the cleaning device rotates to the third direction.

In one embodiment, when the cleaning device is far away from a wall to the right of the cleaning device, the cleaning device is controlled to be close to the wall to the right of the cleaning device and then move in a direction parallel to the wall to the right of the cleaning device, to ensure that the cleaning device performs cleaning more thoroughly along the edge. When the cleaning device is close to the wall to the right of the cleaning device, the cleaning device is controlled to be away from the wall to the right of the cleaning device and then move in the direction parallel to the wall to the right of the cleaning device, to ensure that the cleaning device can normally clean the wall. Specifically, a second preset value and a third preset value may be set, and the third preset value is less than the second preset value. When the distance between the cleaning device and the wall on the side of the cleaning device in the second direction is greater than the second preset value, the cleaning device is controlled to deviate toward the second direction. When the distance between the cleaning device and the wall on the side of the cleaning device in the second direction is equal to the third preset value, the cleaning device is controlled to move in the direction parallel to the wall on the side of the cleaning device. When the distance between the cleaning device and the wall on the side of the cleaning device in the second direction is less than the third preset value and greater than or equal to a fourth preset value, the cleaning device is controlled to decelerate and rotate at a preset rotation speed toward the third direction, or the cleaning device is controlled to move in a direction away from the wall until the distance between the cleaning device and the wall on the side of the cleaning device reaches the third preset value, and then the cleaning device is controlled to move in the direction parallel to the wall on the side of the cleaning device. The fourth preset value is less than the third preset value, and the third direction is opposite to the second direction.

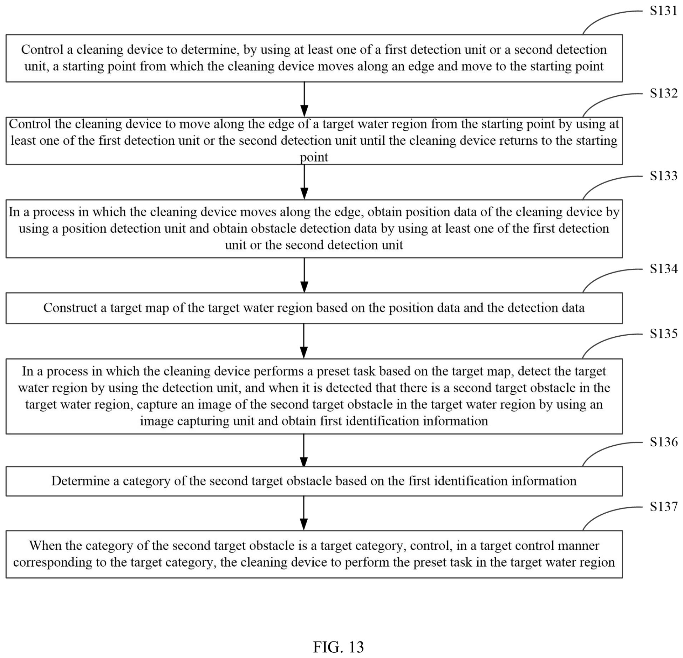

Refer to FIG. 13. FIG. 13 is a schematic flowchart of a seventh embodiment of a cleaning device control method according to this application. The method includes the following steps.

S131: Control a cleaning device to determine, by using at least one of a first detection unit or a second detection unit, a starting point from which the cleaning device moves along an edge and move to the starting point.

S132: Control the cleaning device to move along the edge of a target water region from the starting point by using at least one of the first detection unit or the second detection unit until the cleaning device returns to the starting point.

S133: In a process in which the cleaning device moves along the edge, obtain position data of the cleaning device by using a position detection unit and obtain obstacle detection data by using at least one of the first detection unit or the second detection unit.

S134: Construct a target map of the target water region based on the position data and the detection data.

For specific implementation of steps S131 to S134, refer to related descriptions of the first embodiment of the robot control method provided in this application. Details are not described herein again.

S135: In a process in which the cleaning device performs a preset task based on the target map, detect the target water region by using the detection unit, and when it is detected that there is a second target obstacle in the target water region, capture an image of the second target obstacle in the target water region by using an image capturing unit and obtain first identification information.

In one embodiment, the first identification information indicates feature information obtained by performing image identification on the second target obstacle. The feature information may be feature information extracted based on an underwater target identification algorithm. The underwater target identification algorithm may be, but is not limited to, a target identification algorithm implemented based on artificial intelligence. The second target obstacle may be understood as an obstacle that may be detected by the cleaning device in the target water region, for example, an obstacle such as a ladder, a rag, a leaf, or clothing that affects operation of the pool robot. According to the cleaning device control method, a category of the obstacle is determined, and an appropriate control manner is selected based on the determined category of the obstacle to clean a water environment.

S136: Determine a category of the second target obstacle based on the first identification information.

Different categories are preset for obstacles that may be detected in the target water region. The target obstacles may be categorized based on impacts caused by the target obstacles on the cleaning device. When the cleaning device detects the obstacles of different categories, different control manners may be adopted to control the cleaning device.

In one embodiment, different categories may be preset for the obstacles that may be detected in the pool, and an identification model may be trained based on extracted feature information of the obstacles of the corresponding categories to obtain an identification algorithm for categorizing the identified obstacles. Further, a category of the target obstacle may be determined based on the target identification algorithm and the first identification information.

It should be noted that the different categories set for the obstacles may be set manually based on prior knowledge or may be implemented based on a self-learning category generation algorithm.

For example, an obstacle such as clothing or a rag may adhere to a hub of the cleaning device and affect normal motion of the cleaning device. In this case, it may be considered that the clothing, the rag, and other textiles are classified into one category.

For another example, an obstacle such as a ladder or a stone pillar may prevent the robot from moving and affect normal motion of the robot. In this case, it may be considered that the ladder, the stone pillar, and the like are classified into one category.

In one example embodiment, an example in which the target category is a textile is used. When the cleaning device detects that there is an object A in front, an image of the object A is captured by using an image capturing device, to obtain image data, and then feature extraction and a target detection operation are performed on the image data, to determine that the object A belongs to a textile category. In this case, the textile category is the target category.

It should be noted that, that when the cleaning device cleans the obstacles of different categories, different control manners are adopted to control the cleaning device may be understood as that different cleaning strategies are adopted for the obstacles of different categories. For example, if the obstacle is a textile, a longer avoidance distance is set to prevent the cleaning device from being entangled by the obstacle. For another example, if an obstacle is a ladder, a shorter avoidance distance is set to prevent the ladder from not being cleaned for a long time.

S137: When the category of the second target obstacle is a target category, control, in a target control manner corresponding to the target category, the cleaning device to perform the preset task in the target water region.

In one embodiment, the target control manner has a mapping relationship with the target category. The preset task may include, but is not limited to, one or a combination of performing cleaning, performing disinfection, performing water quality testing, and the like in the pool.

In the above embodiment, categories of obstacles are identified, and the obstacles are processed based on the different categories. It is aimed at addressing a situation in which when an underwater robot encounters different obstacles during actual operation, an execution component of the robot is blocked or a to-be-cleaned region is missed because the robot cannot adopt an effective processing manner. This can improve operating efficiency of the cleaning device. Therefore, a problem of low operating efficiency of the cleaning device can be resolved.

In one optional solution, the obtaining first identification information collected by the cleaning device in the pool includes: when the cleaning device starts to perform the preset task, capturing the image of the second target obstacle in the target water region by using a target image capturing device, to obtain target image data, where the target image capturing device is provided on the cleaning device; and identifying the target image data to determine the first identification information. The target image capturing device may be understood as a device that may communicate with the cleaning device. The target image capturing device may be provided on the cleaning device or at a position at which the target image capturing device may normally communicate with the robot, for example, a pool wall.

In one embodiment, the obtaining first identification information collected by the cleaning device includes: when the cleaning device enters the pool, detecting the pool by using a target sensor; when it is detected that there is the second target obstacle, capturing the image of the second target obstacle by using a target image capturing device, to obtain target image data; and identifying the target image data to determine the first identification information.

Optionally, in this embodiment, the target sensor may be, but is not limited to, an ultrasonic sensor. Sensing information collected by the sensor includes distance information and angle information and includes, but is not limited to, a distance between the obstacle and the cleaning device and a direction angle between the obstacle and the cleaning device. In other words, the sensing information includes the distance information and the angle information, the distance information is used to indicate the distance between the obstacle and the cleaning device, and the angle information is used to indicate the direction angle between the obstacle and the cleaning device. When the second target obstacle is detected by the target sensor, the image of the second target obstacle is captured by the target image capturing device. The target image capturing device may include, but is not limited to, an underwater camera.

In the process in which the cleaning device moves along the edge of the pool or in a rotation process of the cleaning device, a line segment data feature and an angle feature of the obstacle may be obtained based on the sensing information collected by the sensor. The line segment data feature and the angle feature constitute some features of the target water region, for example, some features of a corner and a wall of the target water region.

In one embodiment, the sensing information is collected by the ultrasonic sensor. The sensing information includes some features of the pool, for example, an outer right angle, an inner right angle, an outer circular arc, and an inner circular arc of the pool, and steps and a ladder in the pool. Distance information of a vertical pool side and distance information of each corner of the target water region may be further detected by the ultrasonic sensor.

In one optional solution, the method further includes: when the cleaning device starts to perform the preset task, detecting a water depth at which the cleaning device is located; and determining a capturing parameter of the target image capturing device based on the water depth and capturing the image of the second target obstacle based on the capturing parameter to obtain the target image data. The cleaning device may be pre-configured with target image capturing devices operating at different water depths. The target image capturing devices operating at different water depths have different energy consumption and/or computing capabilities.

It should be noted that an instrument for detecting the water depth may be a conventional physical instrument. After the water depth at which the cleaning device is located is determined, a start-up instruction is sent to a target image capturing device corresponding to the water depth, and then the corresponding target image capturing device starts to operate.

In one embodiment, the determining a capturing parameter of the target image capturing device based on the water depth and capturing the image of the second target obstacle based on the capturing parameter to obtain the target image data includes: when the cleaning device is at a first water depth, determining a first target image capturing device; and when the cleaning device is at a second water depth, determining a second target image capturing device. The first target image capturing device is configured to detect an obstacle at the first water depth. The second target image capturing device is configured to detect an obstacle at the second water depth. The second water depth is greater than the first water depth. Power consumption of the second target image capturing device is higher than power consumption of the first target image capturing device.

Optionally, in this embodiment, the second water depth may be greater than the first water depth. In other words, when the cleaning device is at different water depths, different target image capturing devices are used. When the cleaning device is at a large water depth, a workload of a target image capturing device is heavier, and power consumption is high. When the cleaning device is at a small water depth, a workload of a target image capturing device is lighter, and power consumption is low.

According to this embodiment, different target image capturing devices are used to detect obstacles at different water depths. This can reduce resource overheads of the cleaning device during operation and ensure a certain degree of accuracy.

In one embodiment, the method further includes: detecting water cleanliness of the pool to determine target water cleanliness; and determining a capturing parameter of the target image capturing device based on the target water cleanliness and capturing the image of the second target obstacle based on the capturing parameter to obtain the target image data.

Optionally, in this embodiment, detecting water cleanliness of the pool may be understood as that when water is turbid or clear, corresponding capturing parameters of the target image capturing device are different.

It should be noted that the capturing parameter may be understood as exposure, a focal length, or the like. Different capturing parameters are set, so that better target image data is collected at different water cleanliness to ensure subsequent identification accuracy.

In one embodiment, the determining a capturing parameter of the target image capturing device based on the target water cleanliness and capturing the image of the second target obstacle based on the capturing parameter to obtain the target image data includes: when the target water cleanliness belongs to a first cleanliness interval, configuring the capturing parameter of the target image capturing device as a first capturing parameter and capturing the image of the second target obstacle based on the first capturing parameter to obtain the target image data; and when the target water cleanliness belongs to a second cleanliness interval, configuring the capturing parameter of the target image capturing device as a second capturing parameter and capturing the image of the second target obstacle based on the second capturing parameter to obtain the target image data. The first capturing parameter is a capturing parameter having a mapping relationship with the first cleanliness interval. The first cleanliness interval is different from the second cleanliness interval. The first capturing parameter is different from the second capturing parameter. The second capturing parameter is a capturing parameter having a mapping relationship with the second cleanliness interval.

In one embodiment, the identifying the target image data to determine the first identification information specifically includes: performing feature extraction on the target image data to determine target feature information of the second target obstacle; and pre-processing the target feature information and inputting the pre-processed target feature information into the identification model deployed on the cleaning device to determine the first identification information. The target feature information includes the feature information for determining the category to which the second target obstacle belongs, and pre-processing is performed to increase a weight value corresponding to the feature information.

Optionally, in this embodiment, pre-processing is performed to weight features in the target image data to increase the weight value corresponding to the feature information, in the feature information, for determining the category to which the second target obstacle belongs, so that subsequent identification accuracy corresponding to the pre-processed target feature information is higher.

For example, the pre-processing operation may include, but is not limited to, image enhancement, image denoising, image sharpening, and the like.

In one optional solution, the determining a category of the second target obstacle based on the first identification information includes at least one of the following: determining the category of the second target obstacle as a first category based on the first identification information, where the target category includes a first category, and if the second target obstacle belongs to the first category, it indicates that the second target obstacle is an obstacle that the cleaning device needs to be away from; determining the category of the second target obstacle as a second category based on the first identification information, where the target category includes the second category, and if the second target obstacle belongs to the second category, it indicates that the second target obstacle is a fixed obstacle; determining the category of the second target obstacle as a third category based on the first identification information, where the target category includes the third category, and if the second target obstacle belongs to the third category, it indicates that the second target obstacle is an obstacle for which a reminder message needs to be sent; or determining the category of the second target obstacle as a fourth category based on the first identification information, where the target category includes the fourth category, and if the second target obstacle belongs to the fourth category, it indicates that the second target obstacle is an obstacle that needs to be moved by the cleaning device.

Optionally, in this embodiment, the first category may be understood as a category of an obstacle over which a longer avoidance distance needs to be preset for the cleaning device, for example, a rag or clothing.

Optionally, in this embodiment, the second category may be understood as a category of an obstacle whose existence duration exceeds preset duration, for example, a ladder or a water pipe. The preset duration may be preset by a system or by a human. The existence duration may be obtained by recording time at which the obstacle is identified each time, and the existence duration is duration from earliest time at which the obstacle is identified to time at which the obstacle is most recently identified. Because the existence duration is too long, the cleaning device needs to clean surroundings of the obstacle more carefully, and a shorter avoidance distance needs to be set for the cleaning device.

In one example embodiment, a specific category of an obstacle may alternatively be directly identified based on an image. For example, an underwater ladder is identified as a fixed obstacle. In other words, the existence duration of the obstacle does not need to be identified each time, and when the obstacle is identified for the first time, the category of the obstacle is determined based on the existence duration. Subsequently, the obstacle is directly identified and determined based on the image when the obstacle is identified again.

It should be noted that the fixed obstacle may be understood as an obstacle whose existence duration exceeds the preset duration.

Optionally, in this embodiment, if the second target obstacle belongs to the third category, it may indicate that the cleaning device needs to send a reminder message to a connected target terminal or play a reminder sound effect after identifying the second target obstacle. For example, when identifying a human body, the cleaning device needs to send the reminder message and avoid the human body.

Optionally, in this embodiment, the fourth category may be understood as a category of an obstacle that needs to be moved by the cleaning device. In this case, the cleaning device is configured with a corresponding mechanical control part, for example, a robotic arm. When the obstacle is identified as belonging to the fourth category, the robotic arm is controlled to move the obstacle, so that a region blocked by the obstacle is cleaned.

In one optional solution, the controlling, in a target control manner corresponding to the target category, the cleaning device to perform the preset task in the pool when the category of the second target obstacle is a target category includes at least one of the following: when the category of the second target obstacle is the first category, setting a first obstacle avoidance distance, where the first obstacle avoidance distance is greater than a preset initial obstacle avoidance distance of the cleaning device, and when a distance between the cleaning device and the second target obstacle meets the first obstacle avoidance distance, controlling the cleaning device to perform the preset task in the pool based on the first obstacle avoidance distance; when the category of the second target obstacle is the second category, setting a second obstacle avoidance distance, where the second obstacle avoidance distance is less than the preset initial obstacle avoidance distance of the cleaning device, and when the distance between the cleaning device and the second target obstacle meets the second obstacle avoidance distance, controlling the cleaning device to perform the preset task in the pool based on the second obstacle avoidance distance; when the category of the second target obstacle is the third category, marking a position at which the second target obstacle is located, sending a target reminder message to the target terminal to indicate the position at which the second target obstacle is located in the pool, and performing the preset task in the pool based on the preset initial obstacle avoidance distance of the cleaning device; or when the category of the second target obstacle is the fourth category, controlling the mechanical control part of the cleaning device to move the second target obstacle and controlling the cleaning device to clean the position at which the second target obstacle is located before moving, to control the cleaning device to perform the preset task in the pool.

Optionally, in this embodiment, the first obstacle avoidance distance may be preset based on prior knowledge or set adaptively based on a size of the identified second target obstacle, that is, the first obstacle avoidance distance may be adaptively adjusted based on the size of the second target obstacle.

It should be noted that the second obstacle avoidance distance may be preset based on prior knowledge or set adaptively based on the size of the identified second target obstacle, that is, the second obstacle avoidance distance may be adaptively adjusted based on the size of the second target obstacle.

In one embodiment, the method further includes: obtaining the target map of the target water region and position information of the second target obstacle, where the cleaning device is configured to perform the preset task in the pool based on the target map; and performing marking on the target map and updating the target map based on the position information to obtain an updated target map, to control the cleaning device to perform the preset task in the pool based on the updated target map.

Optionally, in this embodiment, the target map of the target water region may be pre-calibrated based on a map calibration algorithm, and a position of the second target obstacle is not marked on the target map. When the second target obstacle is identified for the first time, the position of the second target obstacle needs to be marked, and the target map is updated based on the position information of the second target obstacle to obtain the updated target map. When a distance between the cleaning device and a target position reaches a preset distance, the cleaning device is controlled to decelerate, and second identification information collected by the cleaning device in the pool is obtained. The second identification information indicates feature information obtained by performing image identification on the second target obstacle in a process of cleaning the pool based on the updated target map. The target position indicates a marked position of the second target obstacle in the updated target map. The category of the second target obstacle is determined based on the second identification information, and when the category of the second target obstacle is the target category, the cleaning device is controlled to perform the preset task in the pool based on a target obstacle avoidance distance corresponding to the target control manner. It may be understood that the updated target map may be displayed on the terminal.

A manner of constructing the target map of the target water region may be as follows: controlling the cleaning device to move along the edge of the pool in the pool; in the moving process of the cleaning device, collecting the sensing information by the sensor provided on the cleaning device to obtain original sensing information; and constructing an original map based on the original sensing information. Alternatively, the cleaning device may be controlled to rotate by one circle at a preset position, and the sensing information is collected by the sensor provided on the cleaning device.

It should be noted that when the sensing information is collected, a feature of an obstacle located at least one of on the side of, in front of, above, or obliquely above the pool robot may be collected. For a specific map construction process, refer to the foregoing related embodiments. Details are not described herein again.

The following describes this embodiment by using specific implementations. An example in which the cleaning device is a pool robot is used. The ultrasonic sensor and the image capturing device are provided on the pool robot. The ultrasonic sensor may detect an obstacle. The image capturing device may capture an image of the obstacle. The pool robot may perform an operation in the swimming pool, for example, cleaning, disinfecting, and testing a water quality of the swimming pool. In a process in which the pool robot operates in the swimming pool, whether an obstacle is detected is determined based on the sensing information (including, but not limited to, distance information of the obstacle and direction information of the obstacle relative to the pool robot) collected by the ultrasonic sensor in the swimming pool. After the obstacle is detected, the image capturing device is controlled to capture and identify an image of the obstacle to finally control, in a corresponding control manner selected based on a category of the obstacle, the pool robot to clean the swimming pool.

In this application, categories of obstacles are identified by using an AI recognition technology and a real-time machine positioning technology, and the obstacles are processed based on different categories. The obstacles are identified and categorized by using the AI recognition technology, and positions of the obstacles are updated on the map, so that different obstacle avoidance strategies are performed for the obstacles of different categories. In a cleaning process, the pool robot collects image information within a preset range by using the image capturing module of the pool robot, and then matches and identifies the collected image information by using the AI recognition technology, to identify a category of an obstacle in front of the pool robot and perform obstacle avoidance processing based on the category of the obstacle. After the obstacle is identified, position information of the obstacle is marked based on position information of the pool robot. This function helps perform some processing actions in advance when the obstacle is cleaned for the second time. For example, when reaching the obstacle marked last time, the pool robot decelerates in advance and confirms the information of the obstacle for the second time. This facilitates subsequent obstacle avoidance processing.

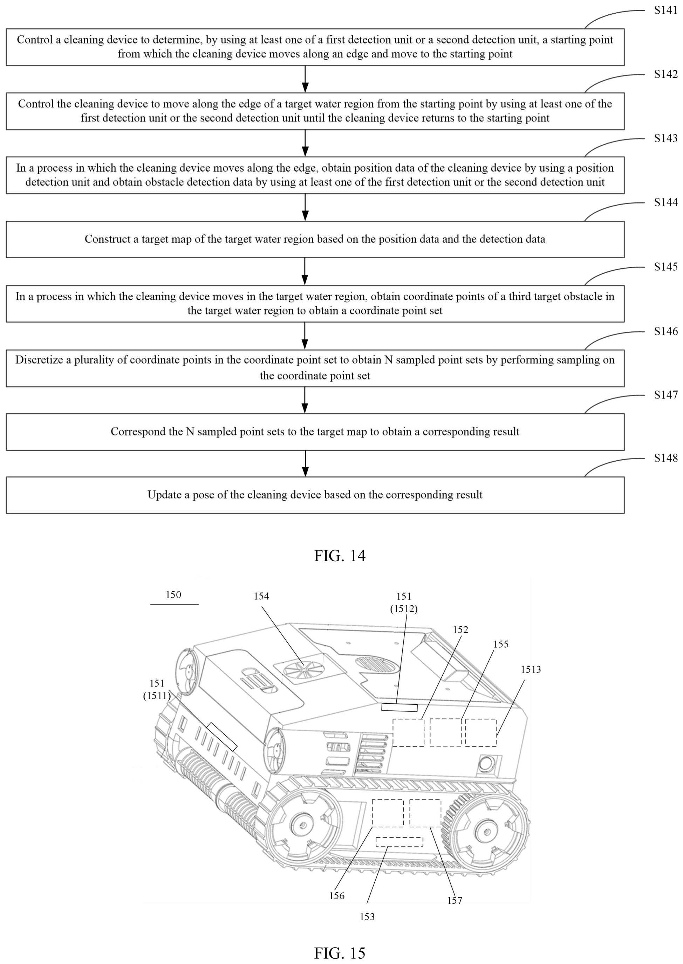

Refer to FIG. 14. FIG. 14 is a schematic flowchart of an eighth embodiment of a cleaning device control method according to this application. The method includes the following steps.

S141: Control a cleaning device to determine, by using at least one of a first detection unit or a second detection unit, a starting point from which the cleaning device moves along an edge and move to the starting point.

S142: Control the cleaning device to move along the edge of a target water region from the starting point by using at least one of the first detection unit or the second detection unit until the cleaning device returns to the starting point.

S143: In a process in which the cleaning device moves along the edge, obtain position data of the cleaning device by using a position detection unit and obtain obstacle detection data by using at least one of the first detection unit or the second detection unit.

S144: Construct a target map of the target water region based on the position data and the detection data.

For specific implementation of steps S141 to S144, refer to related descriptions of the first embodiment of the robot control method provided in this application. Details are not described herein again.

S145: In the process in which the pool robot moves in the target water region, obtain coordinate points of a third target obstacle in the target water region to obtain a coordinate point set.

The coordinate point set includes coordinate points of the third target obstacle actually encountered by the cleaning device in a process of performing an operation. Coordinate points of the third target obstacle in the target map are theoretical coordinate points, and may be inconsistent with the actual coordinate points of the third target obstacle. Coordinate points in the N sampled point sets obtained by performing sampling are compared with the coordinate point set of the third target obstacle in the target map, so that the coordinate points of the third target obstacle in the target map can be optimized.

In one embodiment, in the process in which the cleaning device moves in the target water region, the coordinate points of the third target obstacle in the target water region are obtained by using a target sensor, and coordinate points in a preset time window are extracted from the coordinate points of the third target obstacle to obtain the coordinate point set. In the above embodiment, the target sensor measures the coordinate points of the third target obstacle by using ultrasound. The target sensors may be dual ultrasonic sensors arranged on a side of the cleaning device or provided in the target water region. For example, when the cleaning device is a pool robot, the target sensor is a highly waterproof ultrasonic sensor. A waterproof sealing box is provided outside the target sensor, a probe of the sensor is exposed to water, and the remaining parts are accommodated in the waterproof sealing box. In this way, the ultrasonic sensor can be waterproof. The coordinate points of the third target obstacle can be accurately obtained by using the waterproof target sensor.

S146: Discretize a plurality of coordinate points in the coordinate point set to obtain N sampled point sets by performing sampling on the coordinate point set.

Each sampled point set includes a plurality of sampled coordinate points, and N is a natural number greater than or equal to one. When a quantity of coordinate points in the coordinate point set is greater than a preset quantity, the coordinate point set is rotated and translated based on a preset rotational sampling scale, a preset translational sampling scale, a preset rotational sampling range, and a preset translational sampling range to obtain the N sampled point sets. In the above embodiment, all coordinate points of the third target obstacle within a specific time window threshold are saved, and whether the quantity of coordinate points of the third target obstacle reaches a required quantity. For example, if 10 coordinate points of the third target obstacle are collected within 1 min, the quantity of coordinate points is insufficient, and the coordinate points need to continue to be collected. If 100 coordinate points are collected within 2 min, the 100 coordinate points constitute the coordinate point set. Rotation operations of different scales and translation operations of different scales are performed on the coordinate point set based on different rotational sampling ranges and different translational sampling ranges, and sampling is performed on the rotated and translated coordinate point set.

In one embodiment, after the discretizing a plurality of coordinate points in the coordinate point set to obtain N sampled point sets by performing sampling on the coordinate point set, the method further includes: transforming each coordinate point set in the N sampled point sets from a coordinate system of the cleaning device to a world coordinate system. A sampling manner is not limited.

S147: Correspond the N sampled point sets to the target map to obtain a corresponding result.

In one embodiment, any sampled coordinate point in the target sampled point set corresponds to a coordinate point in the target map. The target sampled point set is any one of the N sampled point sets. Whether the third target obstacle is located at a position indicated by a coordinate point in the target map corresponding to the sampled coordinate point is determined to obtain the corresponding result. For any point in each sampled point set, whether the third target obstacle is located at a position in the target map corresponding to a sampled point is calculated. If the third target obstacle is located at the position in the target map corresponding to the sampled point, a score of the sampled point set is increased by 1. Otherwise, the score of the sampled point set remains unchanged. In this way, a sampled point set with a highest score can be calculated to determine the target sampled point set.

S148: Update a pose of the cleaning device based on the corresponding result.

In one embodiment, when the third target obstacle is located at a position indicated by a coordinate point in the target map corresponding to any sampled coordinate point in the target sampled point set, a score of the target sampled point set is accumulated. When the score of the target sampled point set is greater than a preset score, a target rotation scale and a target translation scale of the target sampled point set are determined. The pose of the cleaning device is updated based on the target rotation scale and the target translation scale. In this embodiment, the sampled point set with the highest score may be used as the target coordinate point set, and the target rotation scale and the target translation scale may be applied to a current moving position of the cleaning device by using a target coordinate point as a position reference, to update the pose of the cleaning device, complete real-time, correlated, and corresponding positioning of the cleaning device in a current period, and enter a next observation period. In this way, the pose of the cleaning device and the map constructed by the cleaning device can be updated in real time.

In the above method, the collected coordinate point set of the third target obstacle is discretized, sampling is performed on the discretized coordinate point set, and the target map is optimized by using the sampled point sets, so that the cleaning device can move in the target water region based on an optimized target map. In this way, problems of inaccurate positioning of an automatic moving device in a water region in a related technology and a low accuracy rate of pose updating can be resolved, and an accuracy rate of positioning of the automatic moving device in the water region can be effectively improved.

In one embodiment, after the updating a pose of the cleaning device based on the corresponding result, the method further includes: constructing an optimized target map of the target water region based on the updated pose of the cleaning device. In this embodiment, the target map constructed based on the updated pose of the cleaning device is more accurate.

Refer to FIG. 15. FIG. 15 is a schematic structural diagram of a cleaning device according to an embodiment of this application.

The cleaning device 150 includes a detection unit 151, a mode switching member 152, at least one water inlet 153, at least one water outlet 154, and a filtering unit 155. The filtering unit 155 is at least partially provided inside the cleaning device. The detection unit 151 includes at least a first detection unit 1511 provided on a front portion of the cleaning device, a second detection unit 1512 provided on a side surface of the cleaning device, and a position detection unit 1513. The first detection unit 1511 and the second detection unit 1512 are configured to detect information of obstacles in different directions of the cleaning device 150. The position detection unit 1513 is configured to determine a position of the cleaning device 150. Each of the first detection unit 1511 and the second detection unit 1512 may be a distance measurement sensor. The position detection unit 1513 can detect a current position of the cleaning device 150, for example, a detection unit for detecting depth information. The filtering unit 155 is configured to filter debris in the target water region.

The cleaning device 150 further includes a memory 156 and a processor 157. The memory 156 stores program instructions. The processor 157 is configured to execute the program instructions stored in the memory 156 to implement the steps in any of the above method embodiments. In one specific implementation scenario, the cleaning device 150 may include a microcomputer, and a server. This is not limited herein.

Specifically, the processor 157 is configured to control itself and the memory 156 to implement the steps in any of the above method embodiments. The processor 157 may also be referred to as a central processing unit (Central Processing Unit, CPU). The processor 157 may be an integrated circuit chip and has a signal processing capability. The processor 157 may alternatively be a general-purpose processor, a digital signal processor (Digital Signal Processor, DSP), an application-specific integrated circuit (Application-Specific Integrated Circuit, ASIC), a field-programmable gate array (Field-Programmable Gate Array, FPGA) or another programmable logic device, a discrete gate, a transistor logic device, or a discrete hardware component. The general-purpose processor may be a microprocessor, or the processor may be any conventional processor or the like. In addition, the processor 157 may be implemented by an integrated circuit chip.

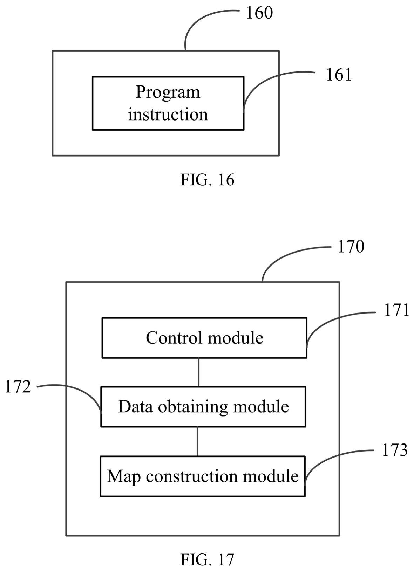

Refer to FIG. 16. FIG. 16 is a schematic diagram of a frame structure of a computer-readable storage medium according to an embodiment of this application.

The computer-readable storage medium 160 stores program instructions 161. When the program instructions 161 are executed by a processor, the steps in any of the above method embodiments are implemented.

The computer-readable storage medium 160 may be specifically any medium that can store a computer program, such as a USB flash drive, a removable hard disk, a read-only memory (ROM, Read-Only Memory), a random access memory (RAM, Random Access Memory), a magnetic disk, or an optical disc, or may be a server storing the computer program. The server may send the stored computer program to another device to run the computer program, or the server may run the stored computer program.

Refer to FIG. 17. FIG. 17 is a schematic diagram of a frame structure of a cleaning device control apparatus according to an embodiment of this application.

The cleaning device control apparatus 170 includes a control module 171, a data obtaining module 172, and a map construction module 173. The control module 171 is configured to: control a cleaning device to determine, by using at least one of a first detection unit or a second detection unit, a starting point from which the cleaning device moves along an edge and move to the starting point, and control the cleaning device to move along the edge of a target water region from the starting point by using at least one of the first detection unit or the second detection unit until the cleaning device returns to the starting point. The control module 171 is further configured to control a distance between the cleaning device and a wall of the target water region to be less than a preset distance in a process of moving along the edge. The data obtaining module 172 is configured to: in the process in which the cleaning device moves along the edge, obtain position data of the cleaning device by using a position detection unit and obtain obstacle detection data by using at least one of the first detection unit or the second detection unit. The map construction module 173 is configured to construct a target map of the target water region based on the position data and the detection data. The target map includes a map of at least one of the bottom of the target water region, the wall of the target water region, or a water surface of the target water region.

In one embodiment, the control module 171 is further configured to control the cleaning device to rotate, perform a target operation, move, and the like. Any action change of the cleaning device may be controlled by the control module 171.

In one embodiment, the map construction module 173 is further configured to: construct a three-dimensional map of the target water region based on depth data obtained by using a depth detection unit, a target map of the bottom of the target water region, and a target map of the water surface; construct a target map model based on the target map, where the target map model includes a bottom model, a wall model, and a water surface model of the target water region; and construct a three-dimensional rendered map of the target water region based on the bottom model, the wall model, and the water surface model of the target water region.

In one embodiment, the cleaning device control apparatus 170 further includes a path planning module. The path planning module is configured to perform path planning on the target water region based on the target map. The control module 171 can control the cleaning device to move along a planned path and to clean the target water region in a moving process.

If the technical solutions of this application involve personal information, before the product to which the technical solutions of this application are applied processes the personal information, an individual has been clearly informed of a personal information handling rule, and the individual has autonomously consented. If the technical solutions of this application involve sensitive personal information, before the product to which the technical solutions of this application are applied processes the sensitive personal information, the individual has separately consented, and a requirement of "express consent" is also met. For example, at a personal information collection apparatus such as a camera, a clear and conspicuous sign is set to inform that an individual has entered a personal information collection scope, personal information is to be collected, and if the individual voluntarily enters the collection scope, it indicates that the individual agrees about collection of his/her personal information; or when the personal information processing rule is informed by using an obvious sign/information at a personal information processing apparatus, individual authorization is obtained by using pop-up information, asking the individual to upload his/her personal information by himself/herself, or the like. The personal information processing rule may include information, for example, a personal information processor, a personal information processing purpose, a processing manner, and types of processed personal information.

The above description describes only embodiments of this application and is not intended to limit the scope of this application. Any equivalent structure or equivalent process transformation performed based on contents of the specification and the accompanying drawings of this application or applied directly or indirectly in other related technical fields shall fall within the protection scope of this application.

## Claims

1. A cleaning device control method, wherein a cleaning device operates in water and comprises a detection unit, wherein the detection unit comprises at least a first detection unit provided on a front portion of the cleaning device, a second detection unit provided on a side surface of the cleaning device, a position detection unit, and a control unit connected to the detection unit via signals, wherein the method comprises:
controlling the cleaning device to determine, by using at least one of the first detection unit or the second detection unit, a starting point fromwhich the cleaning device moves along an edge, and move to the starting point;
controlling the cleaning device to move along the edge of a target water region from the starting point by using at least one of the first detection unit or the second detection unit until the cleaning device returns to the starting point, and controlling a distance between the cleaning device and a wall of the target water region to be less than a preset distance in a process in which the cleaning device moves along the edge;
in the process in which the cleaning device moves along the edge, obtaining position data of the cleaning device by using the position detection unit and obtaining obstacle detection data by using at least one of the first detection unit or the second detection unit; and
constructing a target map of the target water region based on the position data and the obstacle detection data, wherein the target map comprises a map of at least one selected from a bottom, the wall, and a water surface of the target water region.

2. The method according to claim 1, wherein the determining a starting point from which the cleaning device moves along an edge and moving to the starting point comprises: controlling the cleaning device to rotate, determine a position on a wall closest to the cleaning device as the starting point, and move to the starting point in a preset direction, wherein an included angle between the preset direction and the wall meets a preset angle.

3. The method according to claim 1, further comprising: controlling the cleaning device to move from the bottom to the water surface of the target water region, wherein the cleaning device comprises a mode switching member, wherein the mode switching member is connected to the control unit, wherein a process in which the cleaning device moves from the bottom to the water surface of the target water region comprises a process of moving from the wall of the target water region to a waterline, and the control unit controls, by adjusting a volume of gas or liquid in the mode switching member, the cleaning device to be switched to a water surface operation state.

4. The method according to claim 1, wherein the controlling a distance between the cleaning device and a wall of the target water region to be less than a preset distance in a process in which the cleaning device moves along the edge comprises: controlling, by using the first detection unit, a distance between the front portion of the cleaning device and an obstacle in front of the cleaning device to be less than a first target preset distance, and controlling, by using the second detection unit, a distance between the side surface of the cleaning device and an obstacle on a side of the cleaning device to be less than a second target preset distance.

5. The method according to claim 1, wherein the moving along the edge of a target water region from the starting point until the cleaning device returns to the starting point comprises: a variation of a current pose of the cleaning device relative to an initial pose of the cleaning device at the starting point meets a preset threshold, wherein the preset threshold comprises at least one of a preset position variation or a preset yaw angle/azimuth variation.

6. The method according to claim 1, wherein the cleaning device further comprises a depth detection unit, and the method further comprises constructing a three-dimensional map of the target water region based on depth data obtained by using the depth detection unit, a target map of the bottom of the target water region, and a target map of the water surface.

7. The method according to claim 6, further comprising: constructing a target map model based on the target map, wherein the target map model comprises at least one selected from a bottom model, a wall model, and a water surface model of the target water region.

8. The method according to claim 7, further comprising: constructing a three-dimensional rendered map of the target water region based on the bottom model, the wall model, and the water surface model of the target water region and displaying the three-dimensional rendered map on a terminal.

9. The method according to claim 8, wherein the three-dimensional rendered map supports independent splitting for independent selection of a user, and the method further comprises controlling the cleaning device to perform a target operation on an independently selected split unit.

10. The method according to claim 1, wherein the target map comprises a contour map of the bottom of the target water region; and
after the constructing a target map of the target water region, the method further comprises:
performing path planning on the bottom of the target water region based on the contour map to obtain a planned path for the bottom of the target water region, wherein the planned path for the bottom of the target water region comprises a plurality of round-trip parallel paths, and the planned paths for the bottom of the target water region cover the bottom of the target water region; and
controlling the cleaning device to move along the planned paths for the bottom of the target water region and clean the bottom of the target water region in a moving process.

11. The method according to claim 10, wherein the controlling the cleaning device to move along the planned paths for the bottom of the target water region comprises: when the planned paths for the bottom of the target water region are parallel to a longest side or a shortest side of the bottom of the target water region, determining a path closest to the longest side or the shortest side of the bottom of the target water region as a first starting path on which the cleaning device moves, determining an endpoint of the first starting path as a first starting position at which the cleaning device moves, controlling the cleaning device to move from the first starting position until all planned paths for the bottom of the target water region are traversed or it is detected that there is an obstacle within a preset range of the cleaning device, and when all planned paths for the bottom of the target water region are traversed or it is detected that there is the obstacle within the preset range of the cleaning device, controlling the cleaning device to stop moving.

12. The method according to claim 1, wherein after the constructing a target map of the target water region, the method further comprises:
controlling the cleaning device to perform a target operation on the water surface or the bottom of the target water region in a first direction and obtaining a first distance between the cleaning device and an obstacle in a process in which the cleaning device performs the target operation on the water surface or the bottom of the target water region in the first direction;
in a case where the first distance is less than a first threshold, controlling the cleaning device to rotate by a first rotation angle to a second direction and perform the target operation in the second direction; and
in a case where duration for which the cleaning device performs the target operation in the second direction meets preset duration, or in a case where a distance over which the cleaning device performs the target operation in the second direction meets a second preset distance, controlling the cleaning device to rotate by a second rotation angle to the first direction and perform the target operation in the first direction.

13. The method according to claim 12, wherein before the controlling the cleaning device to perform a target operation on the water surface or the bottom of the target water region in a first direction, the method further comprises:
in a case where an initial position at which the cleaning device reaches the water surface or the bottom of the target water region is not at the edge of the target water region, controlling the cleaning device to move to the edge of the target water region, wherein that the initial position is not at the edge of the target water region indicates that a distance between the initial position and the wall is greater than a third preset distance; and
the controlling the cleaning device to perform a target operation on the water surface or the bottom of the target water region in a first direction comprises:
controlling the cleaning device to move from the edge in the first direction based on a preset trajectory to perform the target operation.

14. The method according to claim 1, wherein the target map comprises the map of the wall of the target water region, and after the constructing a target map of the target water region, the method further comprises:
when the cleaning device cleans a first wall of the target water region, controlling the cleaning device to perform cleaning along a first planned path;
when the cleaning device completes moving along the first planned path, controlling the cleaning device to move to a second planned path, wherein the second planned path is substantially parallel to the first planned path, and the second planned path is adjacent to the first planned path; and
controlling the cleaning device to perform cleaning along the second planned path.

15. The method according to claim 14, wherein before the cleaning device cleans the first wall of the target water region, the method further comprises:
determining a variation of a current yaw angle of the cleaning device at a current position point relative to a starting yaw angle of the cleaning device at the starting point from which the cleaning device moves along the edge of the target water region; and
in a case where the variation is greater than a preset yaw angle, taking the current position point as a wall climbing point, and controlling the cleaning device to climb from the wall climbing point to the first wall to clean the first wall; and/or
the method further comprises:
when it is determined that the cleaning device finishes cleaning the first wall, controlling the cleaning device to move to a second wall adjacent to the first wall, and after the cleaning device moves to the second wall, controlling the cleaning device to clean the second wall from a junction line of the first wall and the second wall and clean the second wall along the junction line.

16. The method according to claim 15, wherein the controlling the cleaning device to move to a second wall adjacent to the first wall comprises:
controlling the cleaning device to move from the first wall to the bottom of the target water region, and after the cleaning device reaches the bottom of the target water region, controlling the cleaning device to move from the bottom of the target water region to the second wall; or
controlling the cleaning device to move from the first wall to the second wall via the junction line.

17. The method according to claim 4, wherein the first detection unit detects first detection information in a first direction, and the second detection unit detects second detection information in a second direction, wherein the first direction is a forward direction of the cleaning device, and an angle difference between a right angle and an included angle between the second direction and the first direction is less than a preset angle, wherein
the method further comprises: controlling, based on the first detection information and the second detection information, the cleaning device to move in the target water region; and
the controlling the cleaning device to move in the target water region comprises at least one of the following:
in a case where a distance indicated by the first detection information between the cleaning device and a wall in front of the cleaning device in the first direction, and the distance is less than a first preset distance, controlling the cleaning device to move toward a third direction away from the second direction; or
in a case where a distance indicated by the second detection information between the cleaning device and a wall on the side of the cleaning device in the second direction, and the distance is greater than a second preset value, controlling the cleaning device to deviate toward the second direction to reduce the distance between the cleaning device and the wall on the side of the cleaning device in the second direction.

18. The method according to claim 1, wherein the cleaning device further comprises an image capturing unit, and the method further comprises:
in a process in which the cleaning device performs a preset task based on the target map, detecting the target water region by using the detection unit, and when it is detected that there is a second target obstacle in the target water region, capturing an image of the second target obstacle in the target water region by using the image capturing unit and obtaining first identification information, wherein the first identification information indicates feature information obtained by performing image identification on the second target obstacle in the image;
determining a category of the second target obstacle based on the first identification information, wherein different categories are preset for obstacles that are capable of being detected in the target water region; and
when the category of the second target obstacle is a target category, controlling, in a target control manner corresponding to the target category, the cleaning device to perform the preset task in the target water region.

19. The method according to claim 18, wherein after it is detected that there is the second target obstacle in the target water region, the method further comprises:
updating the target map of the target water region based on position information of the second target obstacle to obtain an updated target map.

20. A cleaning device, wherein the cleaning device operates in water and comprises a detection unit, a mode switching member, at least one water inlet, at least one water outlet, and a filtering unit, wherein the filtering unit is at least partially provided inside the cleaning device, wherein the cleaning device further comprises a memory and a processor, wherein the memory stores program instructions, and the processor is configured to execute the program instructions to implement the method according to any one of claims 1 to 19.
